(19)

**Europäisches Patentamt**
**European Patent Office**
**Office européen des brevets**

(11) **EP 4 501 448 A1**

(12) **EUROPEAN PATENT APPLICATION**

(43) Date of publication:
**05.02.2025 Bulletin 2025/06**

(21) Application number: **23189379.3**

(22) Date of filing: **03.08.2023**

(51) International Patent Classification (IPC):
**B01J 21/18** (2006.01) **B01J 23/755** (2006.01)
**B01J 35/56** (2024.01) **B01J 35/57** (2024.01)
**B01J 35/61** (2024.01) **B01J 37/02** (2006.01)
**C07C 9/04** (2006.01)

(52) Cooperative Patent Classification (CPC):
**B01J 21/18; B01J 23/755; B01J 35/56;
B01J 35/57; B01J 35/612; B01J 35/613;
B01J 35/615; B01J 35/617; B01J 35/618;
B01J 37/0215**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **SICAT**
  **67000 Strasbourg (FR)**
• **Blackleaf**
  **67400 Illkirch-Greffenstaden (FR)**

(72) Inventors:
• **PHAM, Charlotte**
  **67000 STRASBOURG (FR)**
• **BA, Housseinou**
  **67000 STRASBOURG (FR)**
• **LAFUE, Yannick**
  **67100 STRASBOURG (FR)**
• **TRUONG-PHUOC, Läi**
  **67200 STRASBOURG (FR)**
• **DUONG, Viet Cuong**
  **67400 ILLKIRCH-GRAFFENSTADEN (FR)**

(74) Representative: **IXAS Conseil**
  **22, avenue René Cassin**
  **69009 Lyon (FR)**

(54) **METHOD FOR PREPARING COMPOSITE INSULATOR MATERIALS WITH ELECTRICALLY CONDUCTIVE GRAPHENE COATINGS, AND COMPOSITE MATERIALS THEREBY OBTAINED**

(57) Solid catalyst for heterogeneous catalysis, said catalyst being unsupported or supported, and in this latter case comprising an active phase dispersed onto the surface of a catalyst support, said solid catalyst being characterized in that it comprises thin graphitic carbon structures, said thin graphitic carbon structures forming preferably a layer, said thin graphitic carbon structures comprising between about 1 and about 300 graphene layers and preferably between about 1 and about 150 graphene layers.

Figure 3

A          B

Host substrate
Active phase
Few-layer graphene sheet

**Description**

**Technical field of the invention**

The invention relates to the technical fields of materials science and catalysis. More precisely, it relates to a method for preparing composite materials comprising a conductive carbon as a layer of thin graphitic carbon structures deposited onto an insulating support or catalyst and/or dispersed within the insulating support or catalyst. Said support can be a standard insulating support for use as a catalyst carrier, such as a ceramic support, for example alumina ceramics, cordierite ceramic, which can be of the honeycomb type, or carbon-based supports with high porosity and low electrical conductivity. As the carbon added is electrically conductive, it confers to said catalyst carrier or catalyst an electrical conductivity that is sufficient for inductive heating.

**Prior art**

Many industrial processes involve heating. Conventional heating techniques heat the materials by conduction, convection or radiation for propagating the heat from the heat production zone to the location where it is actually needed. In particular, the conductive heat transfer from the surface wall of the reactor to the centre is slow and inefficient. Such slow heat transfer leads to a radial temperature gradient within the reactor, and thus the catalyst bed, which could impact the temperature management of the process. In addition, the low inertia of the heating means renders difficult the heat maintaining of the catalyst bed for endothermic reactions and thus, leads to a lower temperature inside the catalyst bed which may directly impact the catalytic performance.

The efficient use of energy for heating allows saving production cost and is also of paramount importance for ecological considerations by reducing the associated carbon footprint. It is therefore of global interest to develop more efficient heating methods for industrial processes, and especially for operating catalytic reactions, that reduce energy consumption and thereby contribute to the energy transition proclaimed by the governments.

Induction heating (IH) has been widely developed in the manufacture of industrial metal parts (bonding, welding, and sintering) in many industrial sectors. By direct induction heating, heat is generated directly inside the material (which can be magnetic or an electrical conductor), thus considerably reducing the energy lost by convection or thermal radiation compared to other heating techniques. As induction heating relies on electrical energy, it has the potential to replace conventional heating technologies such as fuel gas burners that generate greenhouse gases, depending on the origin of said electric energy. More generally, the electrification of the chemical industry has been identified as a major environmental issue for the next decade.

Catalytic processes represent an important sector in chemical engineering; they are of widespread use for making base chemicals, intermediates and specialities for industrial use and consumer products. Heterogeneous catalysis often implies heating. It would be desirable to limit such heating to the area of interest, which is typically the catalyst (comprising usually a catalyst carrier, also called catalyst support, and an active phase dispersed or coated onto said carrier), present as a fixed bed or as a fluidized bed. This would avoid heating large quantities of fluids as well as reactor components. Heating only the catalytic solid, and not the gaseous effluents passing through the reactor, also makes it possible to reduce secondary reactions in the gas phase and to avoid the thermal decomposition of the reactants leading to the formation of undesirable side products, the nature of which depends on the reaction to be catalysed. The heating process should also reduce the temperature gradient by an improvement of heat transfer, and should allow one to control in real time the catalyst temperature for highly endothermic or exothermic reactions.

Recently, inductive heating has been reported as an efficient heating mode for operating catalytic processes. WO 2014/209 973 (Louisiana State University) reports a catalytic pyrolysis of biomass using a novel catalyst system comprising a metallic particle (having a longest dimension comprised between 100 μm and 5 mm) acting as a catalyst carrier, an oxide or nitrate layer formed onto said metallic particle, a linker (such as a siloxane), and an active phase bonded to said linker. Other catalysts in the form of particles that can be used for inductive heating have been described. So far, the induction heating process has been applied mainly on individual particles stacked with discontinuous connectivity, such as grains, extrudates, and microfilaments entangled with weakly connected structure. In general, in beds formed by particles, local hot spots may occur across the contact points due to poor thermal conductivity between said particles; this can alter the selectivity of the reaction products. This problem is even worse in the case of induction heating: the electromagnetic field is much higher at the contact points, causing local overheating and higher power consumption. As a consequence, for catalysts made of a packed bed of particles, heating is less efficient due to the poor contact between the particles, leading to the formation of local hot spots and to temperature inhomogeneity, in particular in the fixed-bed configuration. Heat loss by overheating at the contact points can also increase the energy input which is required to operate the process at a given temperature.

Therefore, interconnected macroscopically shaped catalysts may represent a better way to operate catalytic processes through induction heating: they may allow to carry out chemical reactions at kinetic limits and with lower energy input due to the more efficient heat transfer throughout the catalyst bed, due to the intimate contact between the heat source and the reaction sites located on or just below the surface of the heating layer.

Inductive heating uses typically radiofrequency radiation that can generate heat via the interaction of a molecular dipole with the alternating electrical field. Conversion of radiofrequency energy into heat can occur according to three main electromagnetic dissipation phenomena, depending on the nature of the susceptor: (a) hysteresis heating generated by ferromagnetic materials cycling through their ferromagnetic loop, (b) magnetic field heating by relaxation losses taking place in superparamagnetic nanoparticles and (c) Joule heating due to eddy currents occurring on electrically conductive samples. As a consequence, catalyst supports for inductive heating must be either electrical conductors or magnetic materials. Prior art offers several solutions, but none is totally satisfactory.

WO 2021/053306 (INSA and CNRS) discloses the use of a ferromagnetic component as heating elements that is either in the form of particles of a few microns mixed with the catalyst powder or as wires directly used as catalyst support. WO 2017/036794 and WO 2020/254184 (Haldor Topsoe) disclose a catalyst support comprising ferromagnetic particles covered by a layer of inert oxide to avoid alloying between the ferromagnetic core and the catalytic active phase. WO2022/076250 (BASF) disclose a catalyst comprising a magnetic material that is capable of induction heating. In the above cases, the magnetic particles typically comprise metallic and/or oxide components which may have a detrimental intrinsic catalytic activity; this effect cannot be suppressed by the oxide layer.

As mentioned above, WO 2014/209973 discloses a method to prepare a catalyst/support composition comprising a metallic support that is appropriate for induction heated catalytic processes; however, the metallic support may also have a detrimental catalytic activity by itself.

Alongside with magnetic compounds, which can be actively heated by inductive heating (IH), electrical conductors such as carbon-based materials can also be efficiently heated up by IH (see Wang W., Duong-Viet C., Tuci G., Nhut J. M., Giambastiani G., Pham-Huu C., "Induction heating: an enabling technology for the heat management in catalytic processes", ACS Catal. 9, 7921-7935 (2019)].

Carbon is a well-known catalyst support available in a variety of structures such as activated carbons, carbon black, carbon felt, nanofibers, nanotubes, graphene, graphene oxides, nanodiamonds. Among those, graphene, graphite, carbon felt and highly structured carbon black are of particular interest because of their high heat conductivity and high electrical conductivity, making them good candidates for induction heated catalysts and catalysts supports. Recently, WO 2023/073000 A1 has reported the use of plain, metal-free carbon catalyst, in either random packed particles or as few-layer graphene (FLG) coated on a structured substrate for the catalytic decomposition of methane into hydrogen and solid carbon. Carbon or FLG coated structured composites allow one to heat up the composites under direct induction heating.

However, the carbon support, and especially low oxygenated functionalized FLG, may not be optimal for the active phase dispersion. A very large fraction of the current commercial catalysts is supported on porous oxides that are electrical insulators and therefore not able to generate enough heat when submitted to electromagnetic fields.

It is thus desirable to provide a metal-free method to greatly increase the induction heating capacity of typical existing catalyst supports, such as oxides or carbide supports, while maintaining their pore structure and surface chemistry and their macroscopic shape.

## Objects of the present invention

The present inventors have surprisingly found that it is possible to manufacture catalysts based on commercial catalyst supports or unsupported catalysts that comprise a layer formed by thin graphitic carbon structures in a quantity sufficient to allow the composites to be heated up through direct induction heating. Said thin graphitic carbon structures typically have the shape of platelets. They are typically deposited from a suspension of platelets in a liquid phase and then dried. On the catalyst support or catalyst, they advantageously form a thin percolated continuous layer. Said thin graphitic carbon structures comprise graphene layers and exhibit an electrical conductivity in the direction parallel to the graphene planes. The layer can therefore act as a susceptor in an alternating electric field and will heat up under these conditions; this heat is then transferred to the catalyst or catalyst support.

The inventors have surprisingly found that it is possible to use such a layer formed by thin graphitic carbon structures in conjunction with an active phase, which is in most cases represented by finely dispersed metallic phases or oxide phases. According to the invention, said active phase can be deposited either before the deposition of the thin graphitic carbon structures onto the support, or it can be deposited onto the carbon layer after the coating step. The layer formed by the thin graphitic carbon structures being porous, in both cases the active phase will be found on the support and/or in the support (if the support is porous).

The inventors have found that the porous layer formed by thin graphitic carbon structures does not impede the function of the catalyst, and more precisely degrades neither the conversion efficiency nor the selectivity of the catalyst.

The invention can be applied to supports that are electrically insulating (such as alumina or silica) or poorly or moderately conductive (such as activated carbon) or semi-conductive (such as silicon carbide); the invention has no specific advantage for use with supports that already exhibit metallic conductivity (such as metal foams). Said support can be catalytically active (such as bulk oxide catalysts) or inactive (knowing that catalytical activity needs to be defined in relation with a specific chemical reaction or type of reaction). They can be porous (such as meso-porous) or non-porous.

A first object of the present invention is a solid catalyst for heterogeneous catalysis, said catalyst being unsupported or supported, and in this latter case comprising an active phase dispersed onto the surface of a catalyst support, said solid catalyst being characterized in that it comprises thin graphitic carbon structures, said thin graphitic carbon structures comprising between about 1 and about 300 graphene layers and preferably between about 1 and about 150 graphene layers.

Said thin graphitic carbon structures typically have the shape of platelets. In a preferred embodiment, said thin graphitic carbon structures form a layer. In a less preferred embodiment, they are integrated in the bulk of the catalyst or catalyst support.

In preferred embodiments, which may be combined between each other:

- Said thin graphitic carbon structures have a mean lateral dimension comprised between about 0.5 $\mu$m and about 300 $\mu$m, and preferably between about 2 $\mu$m and about 200 $\mu$m;

- Said catalyst, prior to the deposition of said layer of thin graphitic carbon structures, has a non-metallic electrical conductivity, and may be an insulator.

- Said catalyst support is selected from the group formed by: alumina; silica; silicates and preferably aluminium silicates and more preferably zeolites; titania; zirconia, cordierite; silicon carbide; activated carbon;

- Said catalyst is in the form of foam, monolith, spheres, grains, pellets, extrudates, sheets, fibers;

- Said catalyst or catalyst support is porous;

- Said catalyst or catalyst support has a BET specific surface exceeding 5 $m^2$/g, and preferably exceeding 10 $m^2$/g;

- Said thin graphitic carbon structures are present in a concentration sufficient to allow inductive heating of said catalyst;

- Said active phase is a metallic phase;

- Said active phase is a metal oxide or a mixture of metal oxides.

Another object of the present invention is a process for making a catalyst according to any of the claims as recited above, wherein said layer of thin graphitic carbon structures is applied from a dispersion of said structures in liquid media, followed by drying, wherein said thin graphitic carbon structures comprise between about 1 and about 300 graphene layers of and preferably between about 1 and about 150 graphene layers, said process being characterized in that said application of said layer is carried out on an unsupported catalyst, or on a supported catalyst comprising a catalyst support and an active phase or a precursor of an active phase, or on a catalyst support prior to the application of the precursor of an active phase.

In a preferred embodiment, said process comprises the following steps:

(i) an unsupported catalyst or a supported catalyst or a catalyst support is provided,

(ii) said layer of thin graphitic carbon structures is applied onto said catalyst or said catalyst support from a dispersion of said thin graphitic carbon structures in liquid media, followed by drying, wherein said thin graphitic carbon structures comprise between about 1 and about 300 graphene layers and preferably between about 1 and about 150 graphene layers, knowing that said application of said layer can comprise a plurality of individual application steps,

(iii) if a catalyst support has been provided in step (i), an active phase is created on said catalyst support by application of a precursor of said active phase, followed by drying, and possibly by activation of the precursor to form said active phase.

Another object of the present invention is a process for using the catalyst according to any of the embodiment recited above in a chemical reactor for a heterogenous reaction, comprising inductive heating of the catalyst. Advantageously, said catalyst is submitted to inductive heating while it is in contact with a gaseous and/or liquid reaction mixture.

Another object of the present invention is the use of a catalyst according to any of the embodiment recited above in a catalytic process, wherein said catalyst is submitted to inductive heating.

**Brief description of the figures**

Figures 1 to 25 relate to various aspects of the present invention and are given here for illustration only; they are not meant to limit in any way the scope of the present invention.

Figure 1 shows a self-standing FLG layer (so-called bucky paper). Figure 1A shows a photograph of two samples of graphene bucky-paper. Figures 1B, 1C, and 1D show images of the bucky-paper obtained by scanning electron microscopy (SEM). The black or white bar indicates a length of 1 mm (figure 1A), 10 $\mu$m (figure 1B), 5 $\mu$m (figure 1C) and 1 $\mu$m (figure 1D). The thickness indicated on figure 1B by the white arrow represents about 48.5 $\mu$m.

Figure 2 shows the pore diameter distribution of the self-standing FLG bucky-paper analyzed by mercury intrusion.

Figure 3 schematically illustrates two embodiments (A and B) of the invention with regard to the deposition of the FLG layer.

Figure 4 relates to the embodiment A of figure 3 and shows images obtained by Transmission Electron Microscopiy (TEM) of an active phase of metallic nickel deposited onto the surface of a SiC catalyst support, followed by a coating of a thin layer of FLG. The four micrographs relate to different zones of the same sample, at different magnifications represented by the white bar, which amounts to 0.5 $\mu$m (figure 4A), 200 nm (figures 4B and 4C), and 100 nm (Figure 4d).

Figure 5 relates to the embodiment B of figure 3 and shows TEM images of an active phase of metallic nickel deposited onto alumina foam which has previously received a FLG coating.

Figures 6 to 13 refer to Example 1. Figures 14 to 20 refer to Example 4. Figure 21 refers to Example 6. Figure 22 refers to Example 7. Figure 23 refers to Example 8.

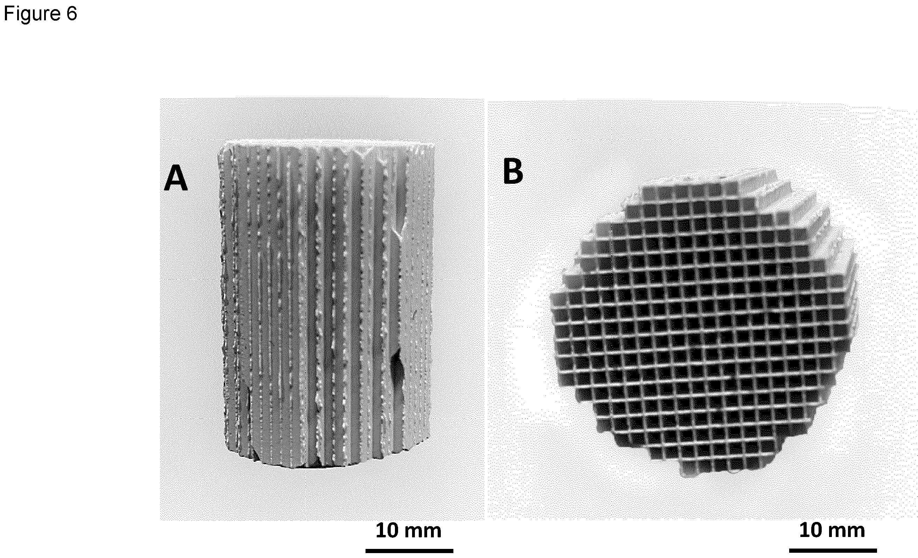

Figure 6 shows two photographs of a cordierite honeycomb body with straight channels (visible on figure B), such a honeycomb body being a shape of catalyst carrier that can be used for the present invention.

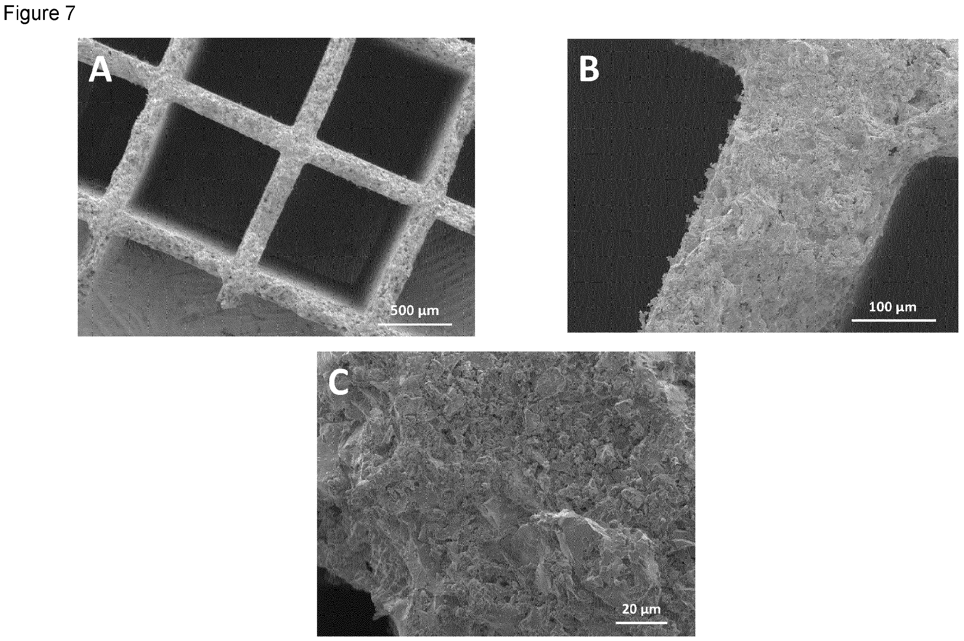

Figure 7 shows a Scanning Electron Microscopy (SEM) image of the honeycomb body of figure 6 at three different magnifications as represented by the white bar which indicates a length of 500 $\mu$m (figure 7A), 100 $\mu$m (figure 7B), and 20 $\mu$m (figure 7C), respectively.

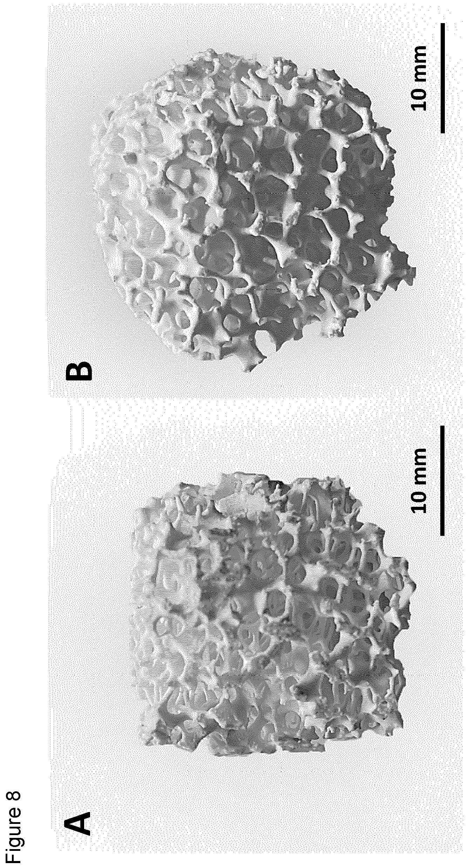

Figure 8 shows photographs of an alpha-alumina foam.

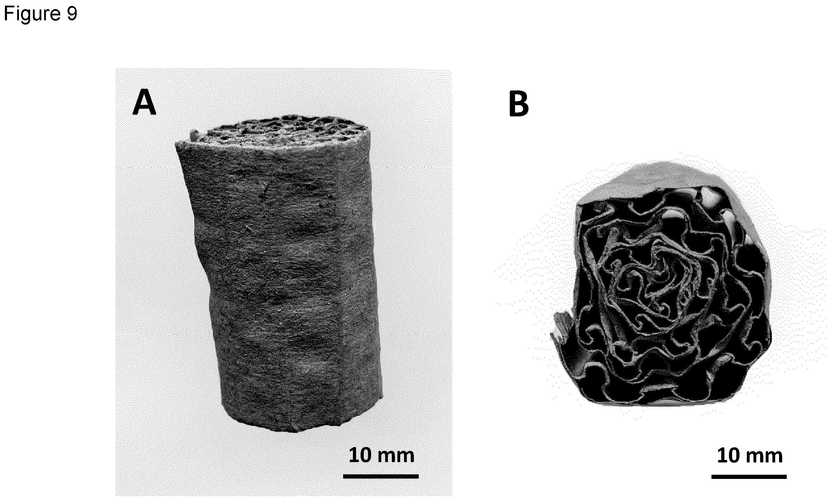

Figure 9 shows photographs of rolled cardboard paper after carbonization.

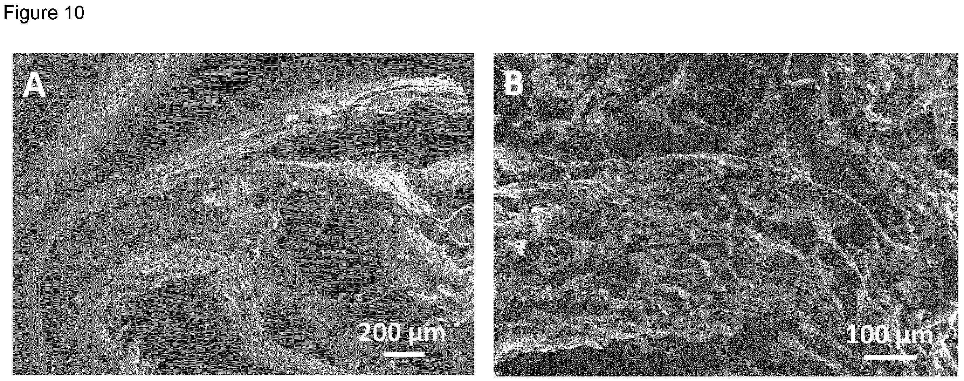

Figure 10 shows a representative SEM image of rolled cardboard paper after carbonization, at two different magnifications as represented by the white bar which indicates a length of 200 $\mu$m (image on the left) and 100 $\mu$m (image on the right).

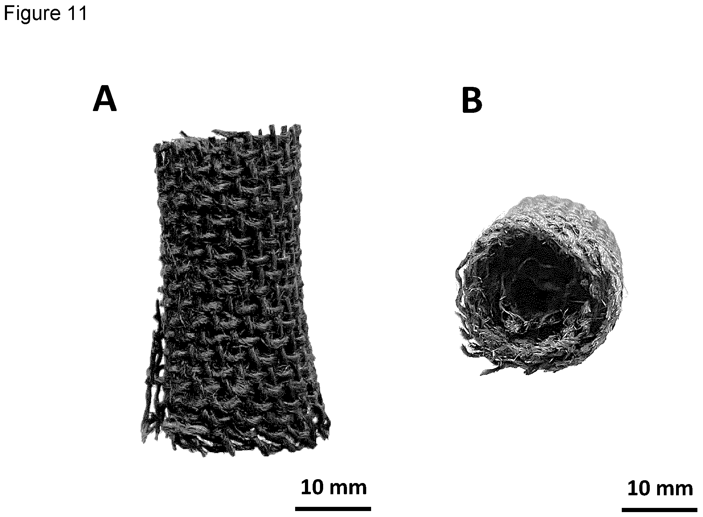

Figure 11 shows photographs of burlap cloth after carbonization.

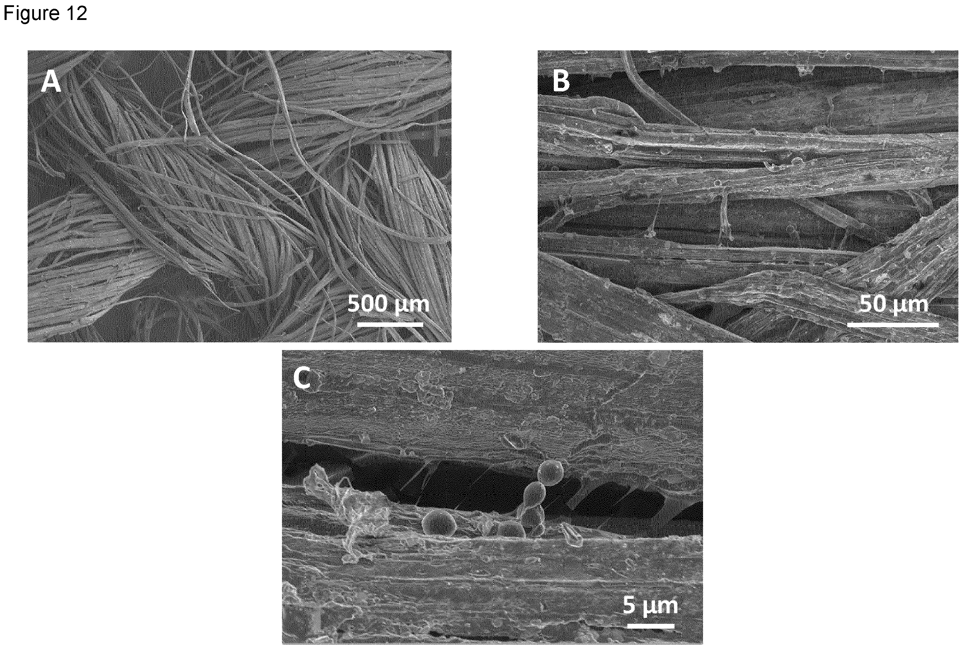

Figure 12 shows a representative SEM image of burlap cloth after carbonization, at three different magnifications as represented by the white bar which indicates a length of 500 $\mu$m (image A), 50 $\mu$m (image B) and 5 $\mu$m (image C).

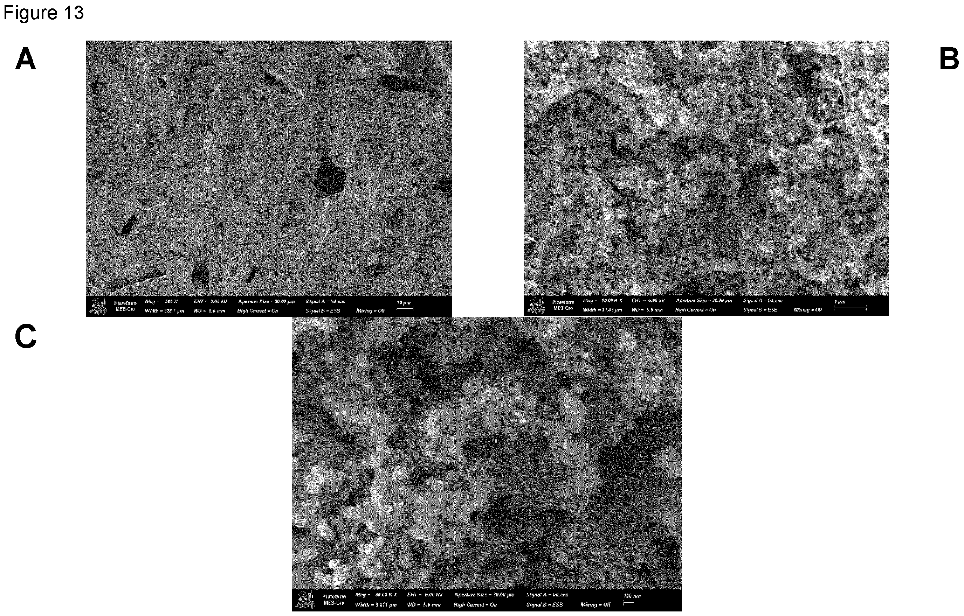

Figure 13 shows representative SEM images of pure mesoporous silicon carbide pellets, at three different magnifications as represented by the white bar which indicates a length of 10 $\mu$m (image A), 1 $\mu$m (image B) and 100 nm (image C).

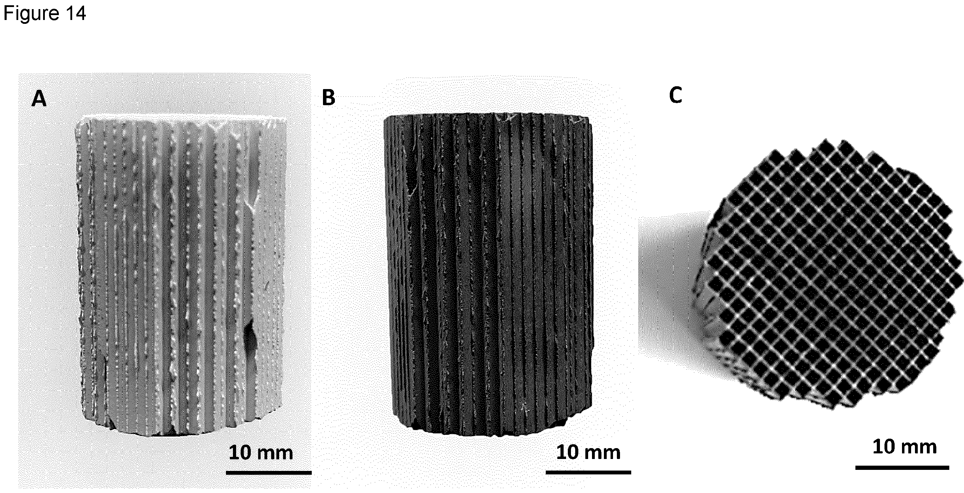

Figure 14 shows two photographs of a cordierite honeycomb body with straight channels before coating (figure 14A) and after coating (figures 14 B and C) with a suspension containing Few Layer Graphene (FLG).

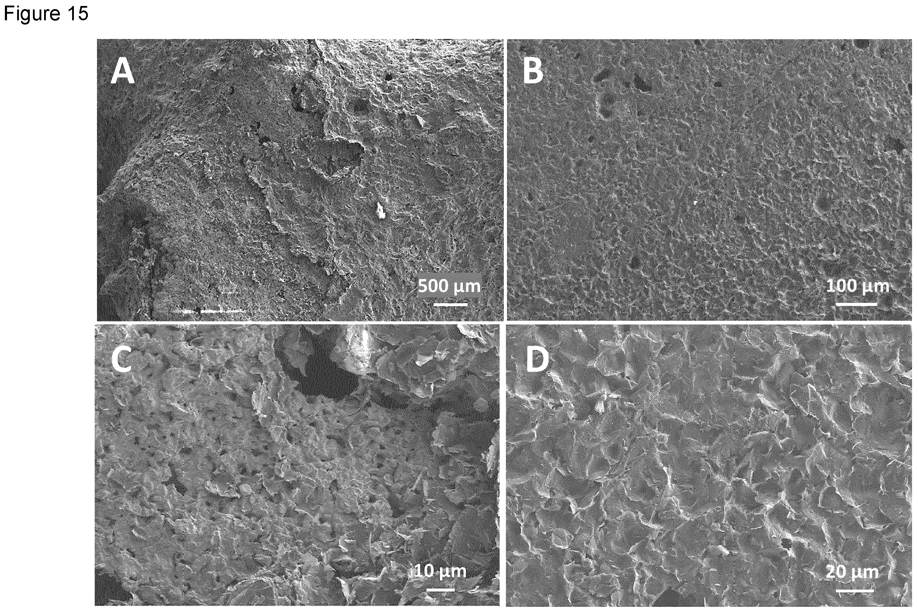

Figure 15 shows representative SEM images of a cordierite honeycomb body coated with FLG, at four different magnifications as represented by the white bar which indicates a length of 500 $\mu$m (image A), 100 $\mu$m (image B), 20 $\mu$m (image D) and 10 $\mu$m (image C).

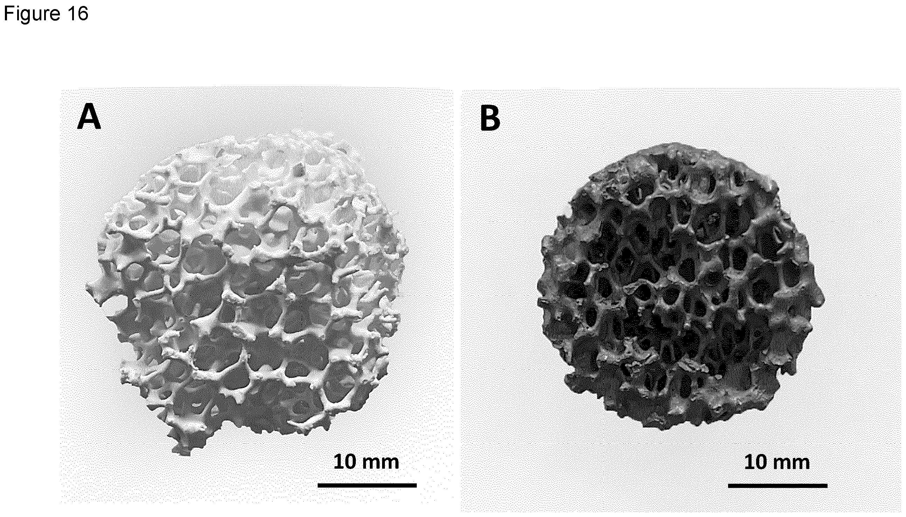

Figure 16 shows photographs of an alpha-alumina foam before (figure 16A) and after (figure 16B) coating with a suspension containing FLG.

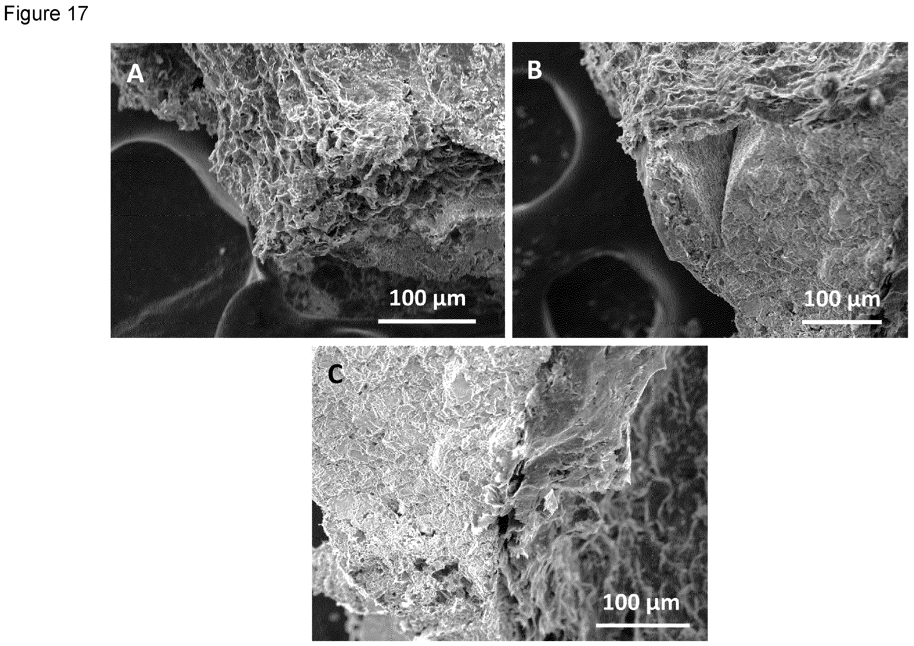

Figure 17 shows representative SEM images of three different zones of an alpha-alumina foam coated with a suspension containing FLG. The magnification is represented by the white bar which indicates a length of 100 $\mu$m.

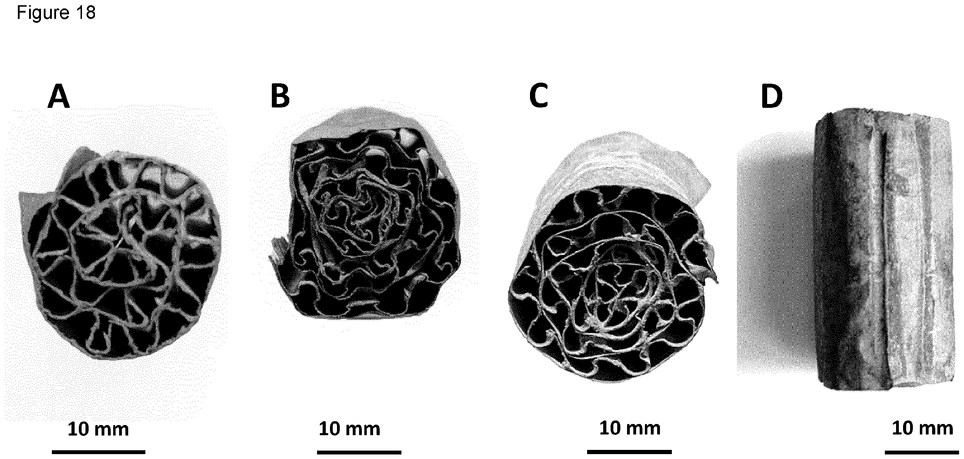

Figure 18 shows photographs of rolled cardboard before carbonisation (image A), after carbonization (image B), and after dip-coating with a suspension containing FLG followed by drying and carbonization (images C and D).

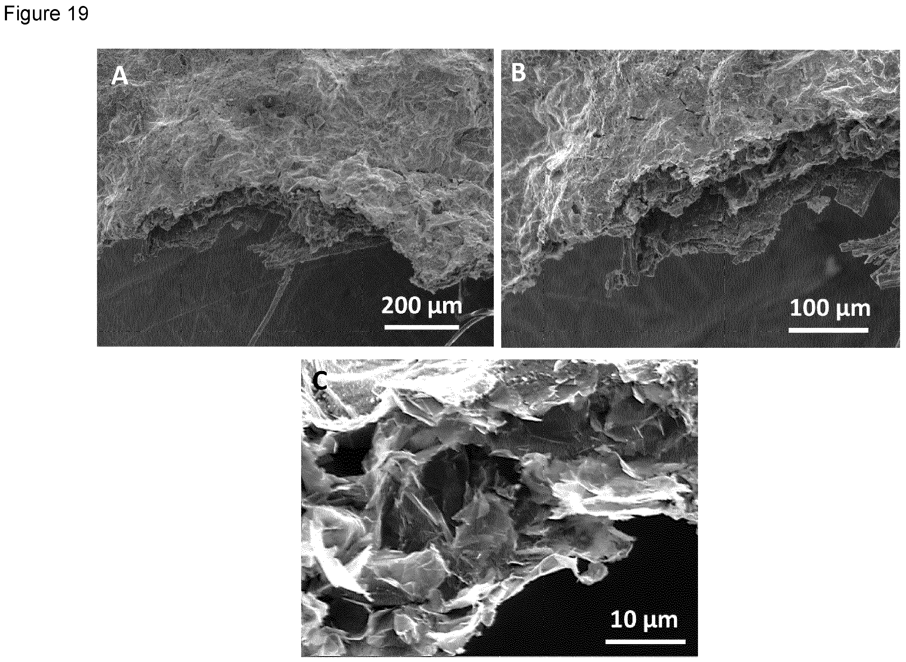

Figure 19 shows a representative SEM image of the cardboard of figure 18C, at three different magnifications as represented by the white bar which indicates a length of 200 $\mu$m (image A), 100 $\mu$m (image B) and 10 $\mu$m (image C).

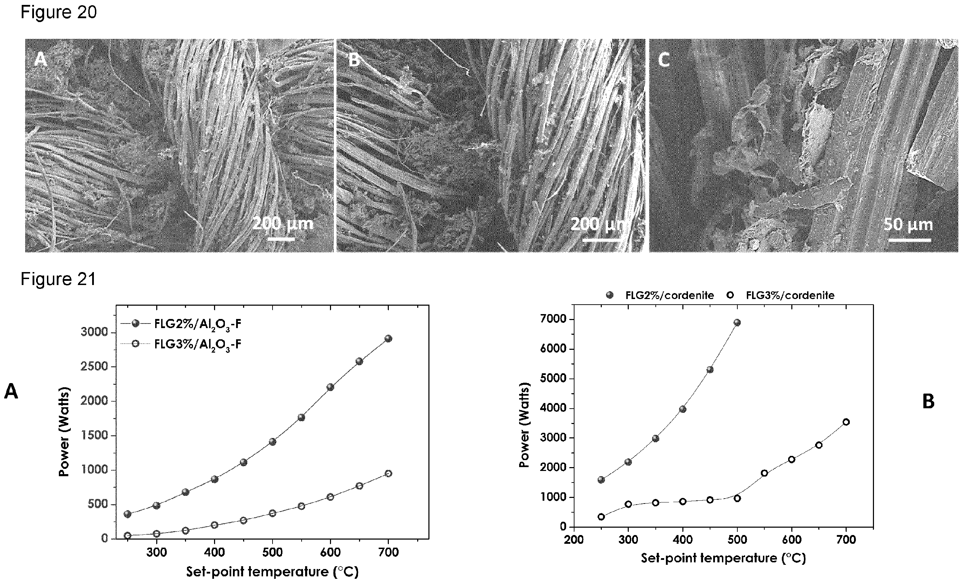

Figure 20 shows representative SEM images of burlap cloth, after coating with a suspension containing FLG followed by carbonization. Images A and B represent two different zones, the magnification being represented by the white bar which indicates a length of 200 $\mu$m. Image C is a high resolution SEM images, the white bar indicating a length of 50 $\mu$m.

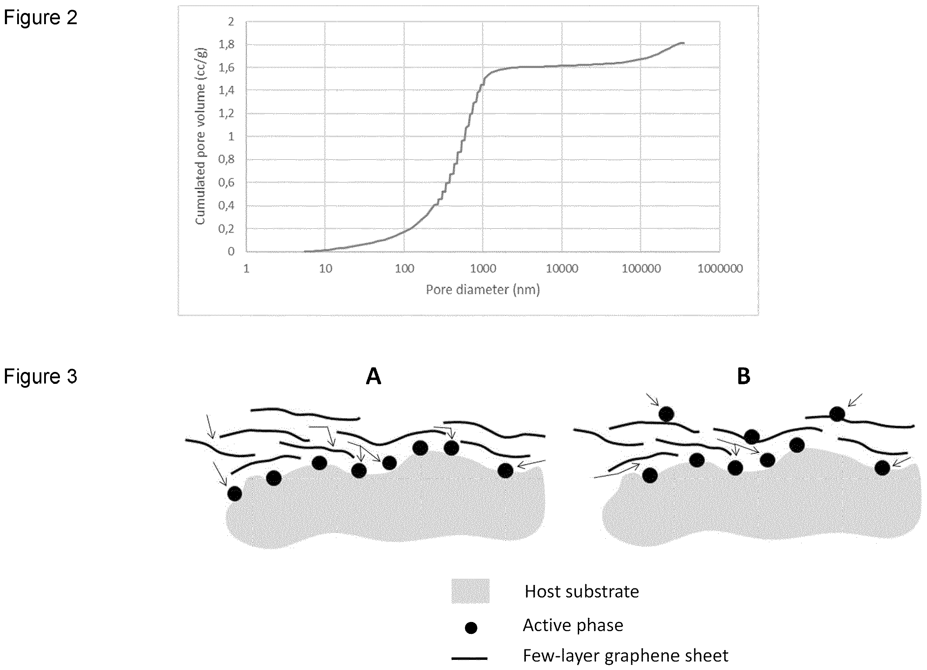

Figure 21 shows the heating performance of different FLG coated samples. Figure 21A compares FLG2%@Al2O3-Foam with FLG3%@Al2O3-Foam. Figure 21B compares FLG2%@Cordierite Honeycomb and FLG3%@Cordierite Honeycomb.

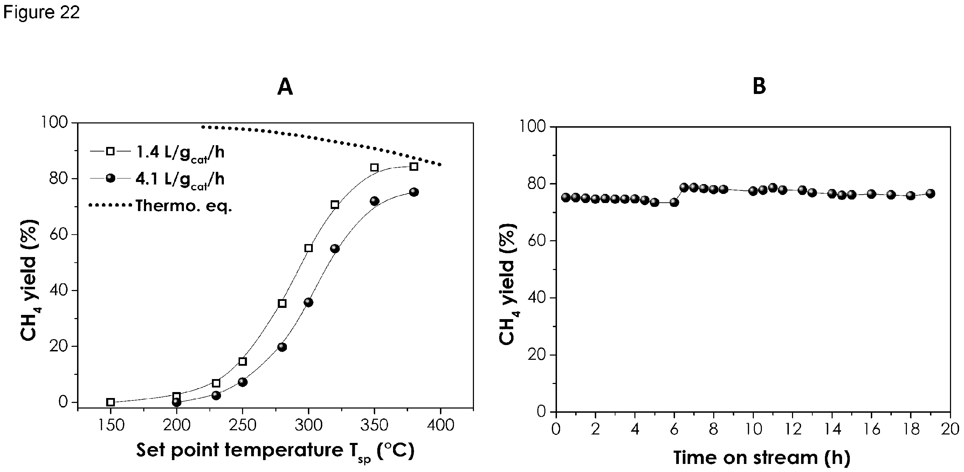

Figure 22 shows, in part A, the methane yield (in percent) of a reaction of $CO_2$ with hydrogen as a function of setpoint temperature, using a Ni-9%-FLG-3%@$Al_2O_3$-F catalyst according to the invention. Part B shows the stability of the yield as a function of time on stream.

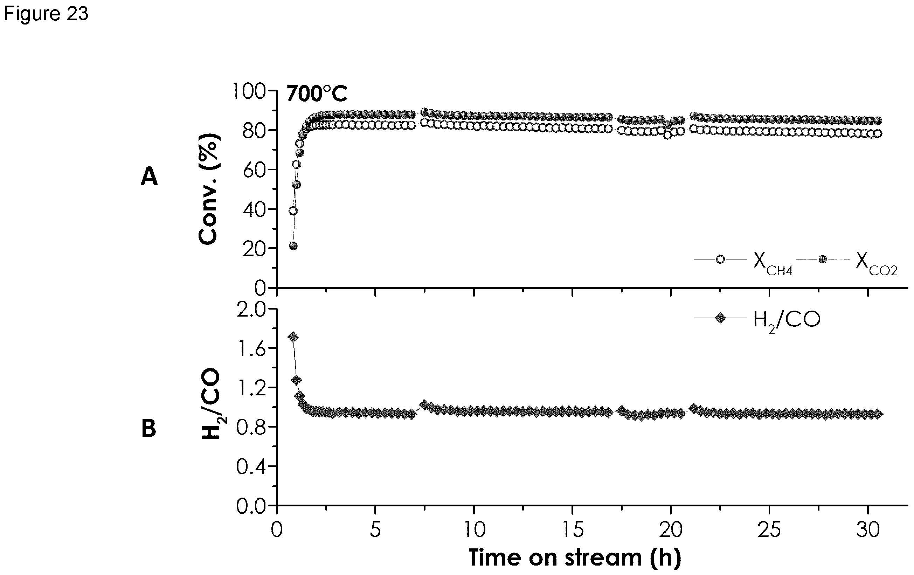

Figure 23 shows, in part A, the conversion yield, and in part B, the Hz to CO ratio, for a dry-reforming reaction of methane, as a function of time on stream, using a FLG6%/Ni2%-Co2%/SiC catalyst.

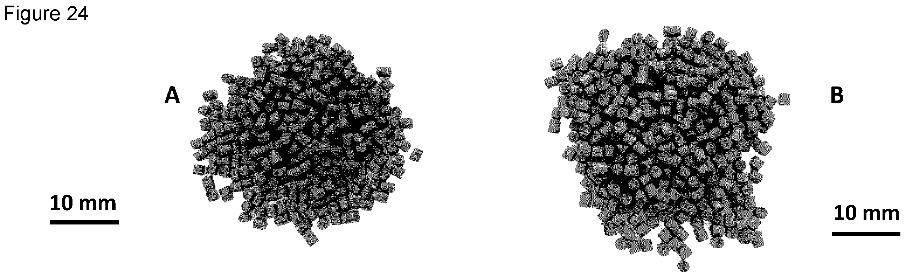

Figure 24 shows photographs of pellets of porous carbon, without (image A) and with incorporation of graphene nanoplatelets (image B).

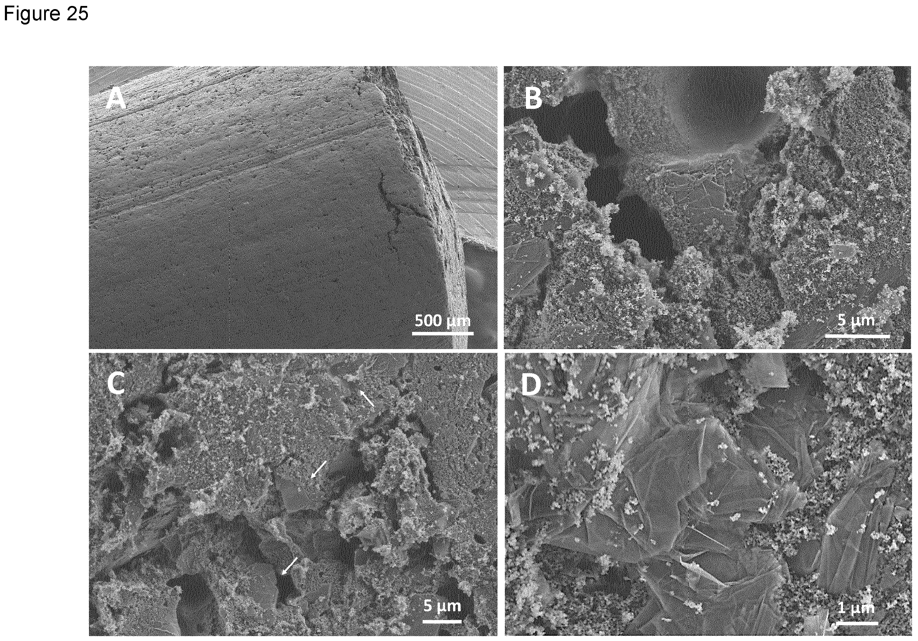

Figure 25 shows a representative SEM image of the pellets of figure 24B containing graphene nanoplatelets, at different magnifications as represented by the white bar which indicates a length of 500 $\mu$m (image A), 5 $\mu$m (images B and C) and 1 $\mu$m (image D). Figure 25A and B show the top surface of the pellet while figures C and D are photos of a broken pellet, i.e., showing an internal surface.

## Detailed description

Unless otherwise specified, all percentage values given in the present document refer to weight percent (also called mass percent).

According to the present invention, a catalyst body is coated with thin graphitic carbon structures, leading to a so-called composite material. We will describe successively the support materials that can be used, the coating processes that can be used, and the uses of such composite materials.

The term "catalyst body" is used here to designate the substrate onto which the thin graphitic carbon structures coating is deposited according to the invention. In particular, said "catalyst body" can be a catalyst support, a supported catalyst or an unsupported catalyst (the latter being sometimes called "mass catalyst" or "bulk catalyst").

The term "thin graphitic carbon structures" is used here to designate carbon structures built up from graphene layers. This term comprises in particular so-called "monolayer graphene" (a single atomic layer of carbon with thickness of 0.34 nm), so-called "very-few-layer graphene" (one to three stacked atomic carbon layers), so-called "few-layer graphene" (abridged "FLG", comprising two to five stacked atomic layers of carbon), so-called "multilayer graphene" (abridged "MLG", comprising five to ten stacked atomic carbon layers) and so-called "graphene nanoplatelets" (abridged "GNP", comprising more than 10 stacked atomic carbon layers, typically up to 300 stacked atomic carbon layers). The lateral size (length and width) of these thin graphitic carbon structures is usually much larger than their thickness, and can range between about 0.5 $\mu$m and about 300 $\mu$m, preferably between about 2 $\mu$m and about 200 $\mu$m.

Thin graphitic carbon structures usually have the shape of platelets. The thickness of said platelets is proportional to the number of graphene layers, knowing that one single layer amounts to a thickness of about 0.34 nm. A platelet having a thickness of about 100 nm comprises about 300 individual graphene layers. In the framework of the present invention, it is preferred that the thin graphitic carbon structures platelets have a thickness not exceeding about 100 nm. Above a thickness of about 100 nm, the coating tends to become brittle, due to a poor overlap between the platelets.

The length and width of said platelets is preferably comprised between about 0.5 μm and about 300 μm. Below a value of about 0.5 μm the overlap between two adjacent platelets is poor, and the percolation (i.e., the electrical path within the coating) is not satisfactory. Above a value of about 300 μm the coating is difficult to carry out. Typically, at least one of their length or width is at least ten times, and preferably at least a hundred or at least a thousand times their thickness.

Within the framework of the present invention, FLG platelets are a specific case of thin graphitic carbon structure. They typically contain between 2 and 5 graphene layers, preferably between 3 and 5 layers. This corresponds to a thickness comprised between about 0.7 nm (preferably about 1.0 nm) and about 1.7 nm. Said FLG platelets have typical side dimensions comprised between about 0.5 μm and about 50 μm, preferably between about 1 μm and about 15 μm or even more preferably between about 1 μm and about 5 μm.

In another preferred embodiment, the length and width of Graphene Nano Platelets (GNP) are between approximately 1 μm and about 200 μm. Preferably, GNP encompasses between 10 and 300 layers. More preferably, GNP platelets have an average lateral size ranging from approximately 5 μm to about 150 μm, more preferentially between about 5 μm and about 50 μm, and most advantageously within the range of 5 μm to 15 μm. As for the thickness of the GNP, it usually varies between approximately 3.4 nm and about 102 nm.

The thickness of the coating of thin graphitic carbon structures is typically ranged from a few nanometers to about 100 μm, preferably from about 0.1 μm to about 100 μm. This range, however, can be further refined based on the percolation rate between the layers, and is preferably between about 0.1 μm and about 20 μm or even more preferably between about 0.5 μm and about 5 μm. A coating thickness lower than 0.1 μm will bring poor electrical conductivity while a coating thicker than 100 μm will lack adhesion to the surface, so it will easily detach.

According to the invention, the thin graphitic carbon structures act as a susceptor material, which is capable of responding to an alternating electromagnetic field by generating heat, and which communicates this heat to the catalyst body material onto which said thin graphitic carbon structures has been deposited or into which it has been embedded.

The electro-thermal properties of the thin graphitic carbon structures coating are intrinsically dependent on the percolation rate, closely linked to the unique morphological structure comprising lamellar structure as observed in Few-Layer Graphene (between 3 and 5 layers and lateral size ranged between 0.5 μm and about 50 μm) up to the boundaries of Graphene Nano-Platelets (between 10 and 300 layers and lateral size ranged between approximately 1 μm and about 200 μm). Percolation occurs when the graphene particles form a continuous network, allowing electrical current to flow through the material while ensuring better mechanical cohesion properties. Especially, to ensure good percolation, it is necessary to have minimum lateral sizes of graphene layers around 0.5 μm to ensure effective conductivity, as longer layers exhibit higher conductivity. Additionally, the thickness of the graphene layers should be sufficiently thin, up to a maximum of 300 nm, to achieve a flexible lamellar structure and an increased effective surface area. This combination of large lateral sizes and thin thickness optimizes the percolation behaviour, enhancing the overall electrical and mechanical properties of the material. This connectivity threshold is crucial in determining whether the material exhibits good electrical conductivity. In contrast, graphite exhibits densely stacked layers with a particulate morphology, rendering percolation highly challenging. This distinction is pivotal in achieving continuous percolation with FLG and GNP, facilitating the fabrication of flexible self-supporting films such as "bucky paper" through Buchner filtration. In contrast, using graphite particles, such as KS6 commercially available from IMERYS, results in incohesive powder aggregates. Upon the application of such a graphite coating onto a catalyst body, a pronounced issue commonly arises, characterized by substantial challenges pertaining to weak adhesion and particle detachment.

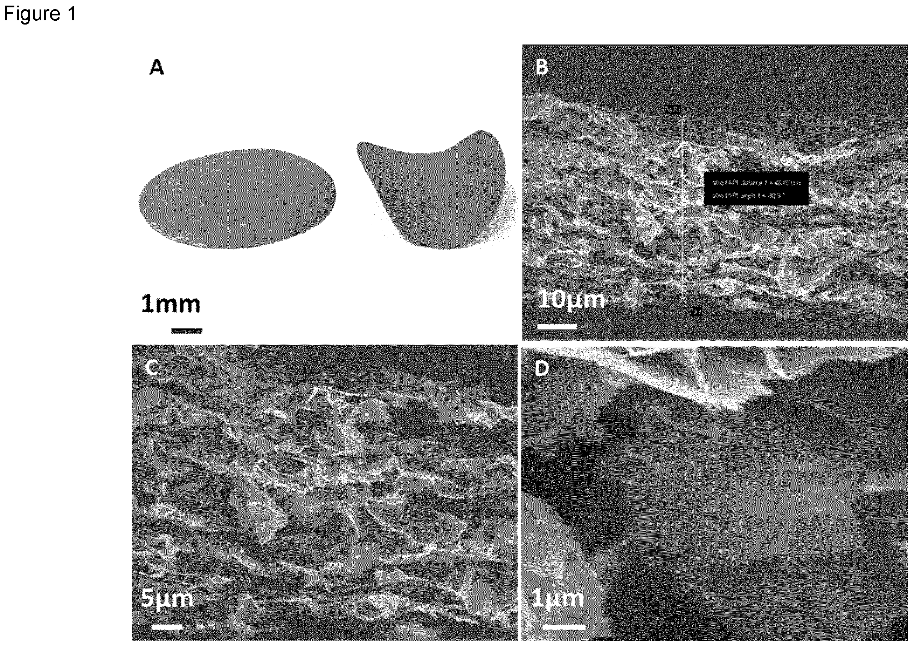

Figure 1 shows a self-standing FLG layer, which is an embodiment of a so-called "bucky-paper". Figure 1A shows a digital photography two disk-shaped samples of FLG-based bucky-paper. This bucky-paper is obtained through a process involving a dispersion of FLG in an aqueous solution, followed by a filtration step and a drying phase that ultimately forms the self-supporting FLG layer. Its BET surface area is 16 m²/g. This FLG-based bucky-paper allows to analyze the inherent physical properties of a FLG layer in an efficient way, in particular porosity and microstructure. Figures 1B, 1C, and 1D show images of the bucky-paper obtained by scanning electron microscopy (SEM). The black or white bar indicates a length of 1 mm (figure 1A), 10 μm (figure 1B), 5 μm (figure 1C) and 1 μm (figure 1D). The bucky-paper exhibits a cross-linking structure among the FLG sheets with a lateral dimension of about 5 μm which generates large and interconnected pores This distinct porosity creates potential diffusion pathways, facilitating efficient transportation of reactants to the active sites. The thickness indicated on figure 1B by the white arrow represents about 48.5 μm.

Figure 2 shows the pore size distribution of the self-standing FLG bucky-paper analyzed by mercury intrusion. The pore volume is higher than 1.6 cc/g, and is essentially made of large pores having a mean diameter of about 500 nm, allowing an easy mass diffusion of either gas or liquid species through the structure.

Figure 3 schematically illustrates two embodiments of the invention with regard to the deposition of the thin graphitic carbon structures layer.

According to a first embodiment of the invention, which is illustrated schematically on figure 3A, the thin graphitic carbon structures layer (here a FLG layer) can be deposited onto a catalyst containing already an active phase (or at least a precursor of an active phase).

According to a second embodiment of the invention, which is illustrated schematically on figure 3B, in a first step, the thin graphitic carbon structures (here a FLG layer) can be deposited directly onto the host substrate, which is the catalyst support, prior to the deposition of the precursor of an active phase. In a second step, the precursor of an active phase is then deposited onto the thin graphitic carbon structures layer. As will be explained below, said layer of thin graphitic carbon structures is porous and will let pass most of the precursor molecules; due to the higher interactions between the host substrate and the active phase precursor, a large part of the active phase will typically be anchored on this later while only a small amount can be found on the thin graphitic carbon structures surface.

In both embodiments the precursor of an active phase needs to be activated, typically by a thermal treatment such as a calcination in air or annealing under an inert atmosphere in order to transform the precursor into its corresponding oxide, possibly under reducing atmosphere if the final active phase is operated in the form of metallic particles.

The arrows on figure 3 represent the diffusion path of the reactants (either liquid or gaseous) toward the active sites, which are localized either exclusively on the host substrate surface (first embodiment, figure 3A) or on both the thin graphitic carbon structures and the host substrate surface (second embodiment, figure 3B).

As shown by Scanning Electron Microscopy (SEM) in Figure 1B, C, D and Hg porosity measurement in Figure 2, the coated FLG layer is formed by a loose stack of FLG platelets which is sufficiently permeable to allow the gaseous reactant to diffuse through the FLG layer to reach the active centres localized underneath on the host substrate surface. Furthermore, the FLG coated layer exhibits large pores. This high porosity of the FLG coating allows to deposit the precursor of an active phase, and also explains why the FLG coating does not impede access of reactant molecules to the active phase.

Representative images obtained by Transmission Electron Microscopy (TEM) are shown here for both embodiments discussed above.

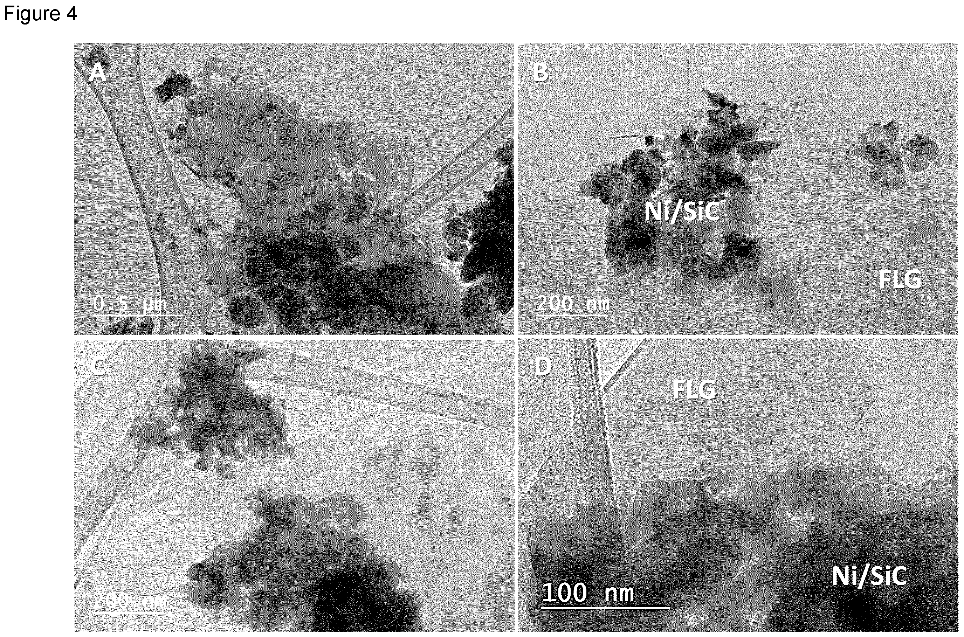

Figure 4 relates to the first embodiment and shows TEM images of an active phase of metallic nickel deposited onto the surface of a SiC catalyst support, followed by a coating of a thin layer of FLG. The four micrographs relate to different zones of the same sample, at different magnifications represented by the white bar, which amounts to 0.5 $\mu$m (figure 4A), 200 nm (figures 4B and 4C), and 100 nm (Figure 4d).

All of the metal particles remain attached on the SiC surface while no metal particles are detected on the FLG layer. As mentioned above the FLG layer is highly permeable due to the presence of macropores which allows high accessibility for the reactants to reach the active centres of the catalyst. Such results confirm that FLG surface coating could be an interesting means to allow induction heating of traditional catalysts without altering the initial catalytic performance of the catalysts, due to the high permeability of the FLG layer. It is worthy to note that FLG layers can be deposited on any kind of heterogeneous catalyst and catalyst support, which include, among others, oxides and ceramic materials. According to the state of the art, such catalyst supports and catalysts cannot be heated by induction means.

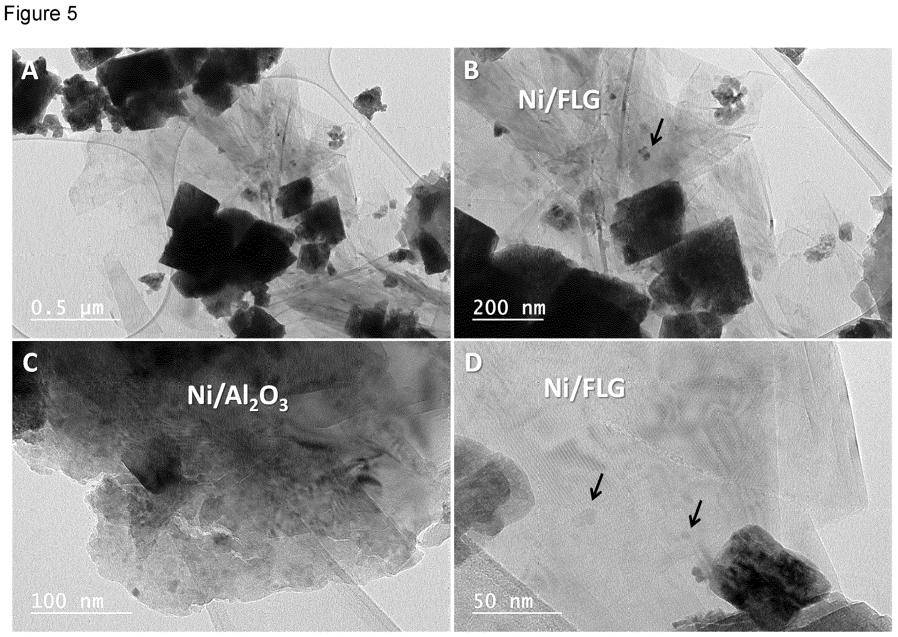

Figure 5 relates to the second embodiment and shows TEM images of an active phase of metallic nickel deposited onto an alumina foam which had received a FLG coating prior to the nickel deposition. After FLG coating and prior to deposition of the nickel precursor, a mild thermal treatment was carried out in order to remove moisture from the FLG surface. The alumina - FLG composite was then impregnated with a solution containing the active phase salt precursor, followed by calcination and reduction steps to obtain a metallic active phase. As shown in figure 5, small amounts of Ni particles can be found on the FLG surface after the impregnation step (indicated by arrows). However, such Ni particles detected on the FLG surface are extremely rare compared to those observed on the alumina one (compare fig. 5C and fig. 5D). It is expected that during the impregnation step, the precursor of an active phase (salt solution) steadily diffuses through the FLG macroporous layer to the alumina surface underneath where it will adsorb. Such results could be attributed to the existence of a higher chemical surface interaction between the Ni precursor and the alumina surface compared to that of the Ni precursor and the FLG surface having a very low oxygen content and a limited surface area. This finding confirms again the role of FLG as inductive heat harvester with low direct participation to the catalytic performance of the active phase.

Both composites containing an active phase, prepared by the method according to the first embodiment or according to the second embodiment described above can be used as catalysts under induction heating process.

The present invention is fully compatible with most existing catalysts based on a metallic or oxide active phase deposited onto a porous inorganic support. It offers several advantages. It allows one to use commercial porous catalyst carriers, such as carbon materials (in particular, carbon foam and activated carbon which may have poor electrical conductivity), zeolites, oxide ceramic materials (such as alumina, zirconia, silica, titania) and non-oxide ceramic materials (such as silicon carbide and silicon nitride) or commercial catalysts. These carriers can either be coated with thin graphitic carbon structures prior to depositing the active phase, or the catalysts can be provided with the active phase already deposited, and the thin graphitic carbon structures layer can be deposited onto the catalyst.

We will now give a detailed description of the various aspects of the invention.

1. Substrates (catalyst body)

The present invention can be carried out with a great variety of substrates (here also called "catalyst body"), which are preferably selected to serve as support materials for catalysts.

The term "catalyst" refers here to heterogeneous catalysis, i.e., to reactions implying gases and/or liquids as reagents and/or reaction products. These substrates can be electrical insulators (such as alumina, silica, silicates) or semiconductors (such as silicon carbide) or poor electrical conductor (such as certain forms of carbon).

Preferred catalyst support materials are alumina, silica, silicates such as aluminium silicates (in particular zeolites), titania, zirconia, cordierite, silicon carbide, and carbon. Each of these materials can be used in various forms and shapes, such as foams (in particular for alumina, silicon carbide, carbon), honeycomb monoliths (in particular for alumina, cordierite, silicon carbide, carbon), pellets. Carbon can be used in various forms, such as extrudates, monoliths, foams, carbonized sheets (for instance from cardboard), carbonized fibres (of various natural or synthetic origin), carbonized textiles (such as carbonized felt or burlap cloth). Preferably the catalyst support materials are porous; they can be mesoporous and/or microporous, as required by the intended use of the catalyst.

It should be noted that some of these support materials can also act as catalysts, under certain conditions and for certain reactions (knowing that catalytical activity needs to be defined in relation with a specific chemical reaction or type of reaction).

The present invention can also be carried out with catalyst bodies which are catalytically active, such as bulk oxide catalysts.

2. Coating process

According to an advantageous embodiment of the invention, the catalyst body is coated with a thin layer of thin graphitic carbon structures. An advantageous aspect of the described deposition process is that the formation of a cohesive thin graphitic carbon structures thin graphitic carbon structures film with continuous percolation does not adversely affect the catalytic perspective. The entanglement of individual FLG or GNP platelets, without calendaring or vacuum processes, induces a crosslinking phenomenon, leading to the generation of a unique porosity conducive to reactant diffusion on active sites.

This coating can be done by putting the catalyst body in contact with a liquid composition comprising a suspension of thin graphitic carbon structures. If the catalyst body is porous, during this first step said liquid composition will impregnate the porous catalyst body. The layer of thin graphitic carbon structures can also be deposited onto the surface of the catalyst bodies through spray or dip-coating processes. This first step of the process, called here the impregnation step, will be described in more detail below.

In a second step, called here the drying step, the excess of liquid is removed if necessary (for example by flushing with compressed air), and the impregnated catalyst body is dried. Drying can take place in an oven, at a temperature comprised between about 60 °C and about 300 °C, typically for a duration comprised between 1 minute and 5 hours, and preferably comprised between about 100 °C and about 150 °C for a duration comprised between 5 minutes and 2 hours. In a specific embodiment, this drying treatment is carried out at about 110 °C for about one hour.

The first step (impregnation step) and the second step (drying step) can then be repeated once or more often in order to increase the loading of thin graphitic carbon structures, using preferably the same liquid composition. Advantageously, the first step and the second step of the process or method according to the invention may be repeated at least once, preferably from 1 to 30 times, even more preferably from 1 to 20 times or else from 1 to 10 times or 1 to 5 times.

After the last drying step, the coated catalyst body is submitted to a thermal treatment in order to remove the remaining liquid inside the porosity and to remove any other absorbed species in the composite or on the carbon platelets. This step also aims to remove some defects or vacancies present on the carbon platelets in order to improve the electrical conductivity of the layer of platelets of thin graphitic carbon structures which will facilitate the heat absorption from the inductor by the final composite. This is the third step of the process, called here the carbonization treatment. It is carried out in an oxygen-free atmosphere or under vacuum to avoid oxidation of the carbon platelets, preferably under argon, helium or nitrogen flow. The temperature is comprised between about 250 °C and about 800 °C, preferably between about 300 °C and about 700 °C. In a specific embodiment this carbonization step is carried out at about 600 °C for about 1 hour under argon flow.

We will now describe in more detail the first step (called here "coating step" or "impregnation step").

The putting in contact of the catalyst body with the liquid composition comprising the platelets of thin graphitic carbon structures may be performed by any method of direct application of a liquid composition. It may for example be performed with a fine brush, a coarse brush or a sprayer. It may be carried out by impregnation of the liquid composition onto the catalyst body, immersion of the catalyst body in the liquid composition, or screen printing. When the placing in contact requires immersion or an excess supply of aqueous composition on the catalyst body, the process or method also comprises an intermediate step of emersion of the catalyst body from the aqueous composition. Removal of the surplus liquid composition from the surface of the catalyst body is optional and generally depends on the type of placing in contact. On the basis of his (her) general technical knowledge, a person skilled in the art is capable of applying this intermediate step, adapted as and when required.

Advantageously, the duration of the first step depends essentially on the method of putting in contact and on the porosity (i.e., on the total surface area of the catalyst body to be covered, and of the size of the pores) of the catalyst body, but may be within a range from 1 second to several tens of minutes, preferably from 30 seconds to 30 minutes, even more preferably from 1 minute to 10 minutes. For example, in the case of immersion, the duration of the first step may be within a range from 10 seconds to 10 minutes, preferably from 20 seconds to 5 minutes, even more preferably from 30 seconds to 2 minutes. In the case of application using a fine or coarse brush, the duration of the first step may be within a range from 10 seconds to 60 minutes, preferably from 2 minutes to 30 minutes, even more preferably from 5 minutes to 20 minutes. In the case of spraying, the duration of the first step may be within a range from 10 seconds to 60 minutes, preferably from 2 minutes to 30 minutes, even more preferably from 5 minutes to 20 minutes.

Dip-coating is a preferred method for carrying out the first step, and leads, after the drying step, to a rather homogeneous layer of thin graphitic carbon structures which typically extends into the pores of the catalyst body material.

As a result of the first step, a substrate is obtained which may be termed a catalyst body impregnated or soaked with liquid deposition composition.

The coating step can be carried out on a catalyst body which either contains an active phase or not. Indeed, in one embodiment of the invention, the host catalyst body can be decorated with an active phase, such as a metal or oxide, through known impregnation methods, followed by an appropriate thermal treatment step, such as drying and calcination, before the coating step to generate a layer of platelets of thin graphitic carbon structures on the catalyst precursor surface. The coated layer will be thus thermally treated to generate a stable layer of platelets of thin graphitic carbon structures on the final host substrate surface in which the active phase was localized in between. A reduction step can be carried out on the final composite to generate the active metallic phase.

Alternatively, the stable layer of thin graphitic carbon structures can be generated prior to the creation of an active catalytic phase.

We will now describe in more detail said liquid composition used for the impregnation step.

Said liquid composition typically comprises a base liquid, thin graphitic carbon structures (such as FLG particles) and appropriate additives. Said base liquid can be a polar liquid such as water or a polar organic liquid such as an alcohol with a light carbon chain, preferably with no more than three carbon atoms (such as methanol, ethanol, or a propanol) or a ketone (preferably with no more than three carbon atoms, such as acetone), or a mixture comprising one or more of these polar organic liquids and/or water. According to a preferred embodiment, at least 70 % wt.-%, and preferably at least 80 wt.-% of said base liquid, and even more preferably at least 90 wt.-% of said base liquid are water. These percentages refer to the total mass of the base liquid and do not include possible additives. According to a most preferred embodiment said base liquid is water.

Said thin graphitic carbon structures can be obtained from graphitic starting materials which are advantageously selected from the group formed by natural graphite, synthetic graphite, highly oriented pyrolytic graphite, carbon nanotubes or nanofibers, carbon black, graphitized carbon, expanded graphite, exfoliated graphite, graphene oxide, or a combination thereof. In comparison with GO (graphene oxide) and rGO (reduced graphene oxide), FLG has markedly superior properties in terms of conductivity due to the absence of oxygenated groups at the surface and also a lower defect density. Some examples of such FLG can be found in WO 2020/079372 (assigned to Centre National de la Recherche Scientifique, University of Strasbourg and Blackleaf) and WO 2020/109380 (assigned to Blackleaf, Centre National de la Recherche Scientifique and University of Strasbourg).

Typically, the concentration of platelets of thin graphitic carbon structures in the liquid deposition composition may be greater than or equal to 0.2 g/L, preferably greater than or equal to 1 g/L or even more preferably greater than or equal to 2 g/L. The concentration of platelets of thin graphitic carbon structures in the liquid deposition composition generally does not exceed 50, 100 or 200 g/L. It may be, for example, in a range from 0.2 g/L to 100 g/L, preferably from 1 g/L to 50 g/L and even more preferably from 2 g/L to 30 g/L.

Appropriate additives comprise especially surfactants. The composition used for the method or process according to the present invention comprises at least one surfactant. Said surfactant may be one or more surfactants chosen from the group comprising polymeric, anionic, cationic, non-ionic and amphoteric (or zwitterionic) surfactants and mixtures thereof. Any type of natural or synthetic surfactant may be used in the context of the invention.

The term "polymeric surfactant" means a surfactant which includes both homopolymers, block and graft copolymers and described by using the Flory-Huggins theory which characterizes the strength of the interactions between the polymer chains and the solvent molecules. Polymeric surfactant generally has polymeric backbone and one or more hydrophilic and hydrophobic groups attached to it. The polymeric backbone can be made up of a variety of materials such as polyethylene glycol (PEG), polyvinyl alcohol (PVA), polypropylene oxide (PPO), polyethylene oxide (PEO), polyethyleneimine (PEI), or other similar materials. The hydrophilic groups of the polymeric surfactant are typically charged or polar, allowing them to interact with water molecules and other polar compounds. The hydrophobic groups, on the other hand, are typically non-polar, allowing them to interact with non-polar compounds.

The term "anionic surfactant" means a surfactant which releases a negative charge (anion) in aqueous solution. An anionic surfactant generally has a relatively high hydrophilic/lipophilic balance (HLB) (which may be between 8 and 18). Mention may be made, for example, of soaps, which are fatty acid salts, of general formula RCOOM (for example R is generally a hydrophobic aliphatic chain and M a metal, an alkali metal or an organic base). Alkaline soaps (such as $Na^+$, $K^+$ or $NH_4^+$ salts), metal soaps (such as calcium salts) and organic soaps (such as triethanolamine salts, for example, including triethanolamine stearate) can be used, for example. Sulfate derivatives (such as sodium laureth sulfate, sodium lauryl sulfate and triethanolamine lauryl sulfate), sulfone derivatives (such as sodium dioctylsulfosuccinate) and lipoamino acids can also be used.

The term "cationic surfactant" means a surfactant which releases a positive charge (cation) in aqueous solution. They are generally nitrogenous products (bearing a positively charged nitrogen atom). Mention may notably be made of quaternary ammonium salts such as alkyltrimethylammonium salts (the anion can be bromide for example), alkyl-benzyldimethylammonium salts (such as benzalkonium chloride).

The term "nonionic surfactant" means a surfactant which does not include any net charge and which does not become ionized in water. Three main categories of nonionic surfactant are identified.

The first category are surfactants bearing an ester bond (R-C(O)-O-R', R and R' being, for example, hydrophobic aliphatic chains), among which mention may be made of glycol esters (such as ethylene glycol stearate), glycerol esters (such as glyceryl stearate), polyoxyethylene glycol esters (obtained by the action of ethylene oxide on a fatty acid or a mixture of fatty acids), sorbitan esters, polyoxyethylene sorbitan esters (more commonly referred to as Tweens™ 20, 60, 80, etc. or polysorbates), sucrose esters (consisting of a hydrophilic saccharide group and of a hydrophobic fatty chain).

The second category are surfactants bearing an ether bond (R-O-R', R and R' being, for example, hydrophobic aliphatic chains), such as ethers of fatty alcohols and of polyoxyethylene glycol.

The third category are surfactants bearing an amide bond (R-C(O)-NH-R', R and R' being, for example, hydrophobic aliphatic chains).

The term "amphoteric surfactant" or "zwitterionic surfactant" means a surfactant which comprises both acidic and basic functions. As a function of the pH of the medium in which it is present, it can release either a positive ion or a negative ion. Amphoteric surfactants generally have a high HLB. Amphoteric surfactants that can be used here include cocamidopropylbetaine (comprising a quaternary ammonium group and a carboxylic acid group), imidazoline derivatives or polypeptides.

Advantageously, the anionic surfactant may be chosen from the group comprising carboxylates, sultanates or sulfates, such as sulfosuccinates, alpha-olefin sultanates, alkyl glyceryl ether sultanates and sodium cocoyl monoglyceride sulfates, alkylbenzenesulfonates and mixtures thereof.

Advantageously, the cationic surfactant may be chosen from the group comprising quaternary ammonium salts, for instance alkylamidodimethylpropylamine or methyl triethanolammonium, and mixtures thereof.

Advantageously, the nonionic surfactant may be chosen from the group comprising esters, amides or ethers bearing hydrophobic aliphatic chains, for instance polyglyceryl alkyl ethers, glucosyl dialkyl ethers, sorbitan esters, polysorbates, polyglyceryl-3 diisostearates, and mixtures thereof.

Advantageously, the amphoteric surfactant may be chosen from the group comprising, for example, cocamidopropylbetaine, cocamidopropylsultaine, lauroamphoglycinate, dihydroxyethyl tallow glycinate, disodium cocoamphoacetate, isostearoamphopropionate, and mixtures thereof.

Advantageously, the liquid deposition composition, for example when it is a commercial solution of surfactants to which are added the platelets of thin graphitic carbon structures, may also comprise, without being limited thereto: preserving agents, antimicrobial agents, stabilizers, humectants, chelating agents, viscosity regulators or any other additive, and mixtures thereof.

Advantageously, the mass concentration of surfactant(s) in the liquid deposition composition used in the first step is within a range from about 0.1% to about 50%, preferably from about 0.5% to about 10% and even more preferably from about 0.5% to about 3%.

Further additives that may be contained in the liquid deposition solution may comprise binders, preserving agents, antimicrobial agents, stabilizers, humectants, chelating agents, viscosity regulators or any other functional additive, and mixtures thereof.

Binders are used to enhance the adhesion of the graphene layer on the host substrate (catalyst body). Said binders can be for example organic binders (such as sugar, PVP, PVA, carboxymethyl cellulose, lignosulfonates, polyethylene glycol, gelatine, dextrine) or mineral binders (such as alumina, aluminium phosphate, magnesium silicate, bentonite, sodium silicate).

Advantageously, the liquid deposition composition may be obtained by ultrasonication of graphite, which is preferably expanded, in a liquid phase comprising one or more surfactants, for example in micellar water (liquid composed of water and of micelles).

3. Use of the composite materials as catalyst support or catalyst

The inventors have found that the composite material comprising an electrically insulating catalyst support, or low electrically conductor materials, and a highly electrically conductive carbon layer can be used as a catalyst support for receiving a catalytic phase. Said catalytic phase can be deposited onto said composite using methods known to a person skilled in the art, to the extent that they are compatible with said carbon structure. Techniques that can be used are for instance impregnation of the composite by a liquid phase comprising a precursor of an active phase, such as metal salt dissolved in said liquid phase, followed by drying, calcination and reduction of said precursor to metallic particles that are catalytically active.

The coating layer of thin graphitic carbon structures can also be directly deposited onto a catalyst body, comprising optionally a catalyst support and an active phase generated after optionally impregnation, drying and calcination/reduction steps.

The as-synthesized composites can also be directly used as catalysts for some relevant applications where induction heating represents an advantage in terms of heat transfer and heat management compared to the traditional heating mode through indirect convection and conduction; this is the case, for example, with FLG coated zeolite for isomerization or dehydroaromatization reactions, carbon-based composites for chemical conversion of waste plastics into valuable chemical products, just to cite a few.

4. Induction heating mode

Induction heating is generated by an alternating magnetic field, and provides a noncontact heat source, which supplies heat through three different mechanisms: Eddy currents, magnetic hysteresis, and magnetic resonance. Induction heating can result from eddy currents (also called Foucault currents) generated in an electrically conducting object (here a carbon-containing catalyst as defined herein) submitted to a magnetic field. Eddy currents are currents induced in a conducting element by the oscillating field to generate heat on the outer surface of the said conductive element, due to skin depth effects, and the heat generated on the outer surface is transferred into the whole solid matrix through conduction.

An induction heater typically consists of an electromagnet, and an electronic oscillator which passes a high-frequency alternating current (AC) through the electromagnet. The rapidly alternating magnetic field penetrates the object, generating electric currents (so-called eddy currents) inside the conductor.

In an embodiment of the process according to the present invention, said carbon-containing catalyst is heated by generating an alternating electromagnetic field within the reaction zone containing said carbon-containing catalyst upon energization by a power source supplying alternating current, where the alternating electromagnetic field passes through the reaction zone thereby generating an electric current in said carbon-containing catalyst and heating said carbon-containing catalyst. An important advantage of applying the induction heating process in the present invention is that the heat is generated inside the object itself (i.e. the catalyst), and the catalyst material can be very rapidly heated. The heat is generated locally in the reaction zone at the site where the heat is required.

In the above embodiments of a process according to the invention, the carbon-containing catalyst or catalyst support, coated with a layer of susceptor, is heated by induction. This provides the heat necessary for the chemical conversion reaction, either endothermic or exothermic processes. In such process operation only the catalyst is maintained at the setpoint temperature while it is not necessary to pre-heat the reactant mixture as usually encountered with traditional Joule heating with gas burners. The reactants, either gas or liquid, is rapidly heated up when their enter in contact with the catalyst surface, typically by being adsorbed onto the surface of the catalyst, as well as by convection prior to the reactant(s) contacting the surface of the catalyst. The surface temperature changes, consecutive to the adsorption of the reactants or to the reaction (endothermic or exothermic), will be instantaneously off-set by the high heat response of the inductor which allows the maintaining of the setpoint reaction temperature. Such surface temperature maintaining is challenging in the case of indirect heating, through convection and conduction heat transfer, due to the high thermal inertia of the setup to provide/adjust heat at the heart of the catalytic system.

A direct heating mode associated with a high heating rate allows to operate endothermic reaction without facing its intrinsic drawback, i.e., temperature loss within the catalyst bed as a function of conversion of the reactant, and to reduce the problem of temperature runaway within the catalyst bed in the case of exothermic processes. Indeed, the temperature regulation of the inductor is monitored by laser pyrometers which provide an extremely fast feedback about the temperature change inside the catalyst bed and thus, allow the inductor to increase or decrease the power input to maintain the catalyst bed at temperature as close as the set one. Fast temperature regulation of induction heating allows one to maintain the catalyst bed temperature as close as possible to the targeted one, regardless the reactant conversion level as well as the intrinsic heat change of the reaction itself, i.e., endothermic or exothermic.

In an embodiment of the process according to the invention, said carbon-containing catalyst or catalyst support is heated by means of induction heating, thereby heating the reaction zone containing said carbon-containing catalyst to a reaction temperature which is comprised between 200 and 1200°C, or between 300 and 900°C.

The reaction gas or liquid may be optionally heated prior to supplying it to the reaction zone. It is however preferred that the reaction gas or liquid is supplied to said reaction zone at a temperature which is lower than the reaction temperature of the present processes.

It will be understood that suitable temperatures of the reaction gas or liquid to be supplied in the process according to the invention will depend on the reaction temperature as applied in the process.

In certain embodiments, the reaction gas or liquid is not heated prior to being supplied to said reaction zone.

It is also worthy to note that induction heating is barely heating up the gas phase medium and thus, the gas stream exit of the reaction is rapidly cooled down after leaving the catalyst bed which is not the case for traditional Joule heating. Such rapid quenching process could contribute to the reduction of secondary reactions and also to reduce the complexity of the process through the use of cooler or heat exchanger.

**Examples**

In some of these examples, the composite materials were analysed with different characterization techniques including Scanning Electron Microscopy (SEM), Transmission Electron Microscopy (TEM), electrical conductivity measurements, Raman spectroscopy, and TGA. These characterization techniques are well-known to a person skilled in the art and will not be explained here in further detail unless necessary.

Example 1: Characterization of insulator supports used for making composite materials according to the invention that are useful as catalysts or as catalyst supports

Different insulator supports were used in the present work: honeycomb-like cordierite monolith with straight channels (30 cpsi), alumina foam (20 ppi), silicon carbide extrudates, carbonized cardboard paper and burlap cloth. The supports were characterized with different techniques including scanning electron microscopy (SEM) and electrical conductivity measurements. These characterization techniques are well-known to a person skilled in the art.

The scanning electron microscopy (SEM) was carried out on a ZEISS 2600F with a resolution of 5 nm. The sample was deposited onto a double face graphite tape in order to avoid charging effect during the analysis.

Photographs (figure 6) and SEM micrographs (figure 7) of the cordierite honeycomb (CH) with straight channels are presented. The material exhibits an interconnected microstructure constituted by aggregates of primary particles with a relatively low porosity; macropores can be identified within the wall. Such monolith can be prepared with different shapes, i.e. length and diameter, depending on the downstream applications. The open channels along the longitudinal axis of the monolith are useful for operating high space velocity process where low pressure drop is mandatory. The thin wall of the monolith also provides high heating surface contact with active sites for promoting the reaction.

Figure 8 shows two representative photographs of a low specific surface area alpha-alumina foam ($Al_2O_3$-F) with a porosity of 20 ppi. Large pores and interconnectivity are present throughout the material. Such monolith can be prepared with different shapes, i.e. length and diameter, depending on the downstream applications.

Figure 9 shows representative photographs, and Figure 10 shows representative SEM micrographs, of rolled cardboard paper (CB), before and after carbonization at 800 °C for 1 h under argon flow, at different magnifications. Large pores, which are due to the gasification of organic compounds, and interconnectivity throughout the material can be seen. Such monolith can be prepared with different shapes, i.e., length and diameter, depending on the downstream applications. The open channels along the longitudinal axis of the monolith are useful for operating high space velocity process where low pressure drop is mandatory. The thin wall of the monolith also provides high heating surface contact with active sites for promoting the reaction.

Figure 11 shows representative photographs, and Figure 12 shows representative SEM micrographs, of burlap cloth, after carbonization under argon flow at 700°C for 1 h, at different magnifications. The material exhibits large pores and interconnectivity throughout its bulk. The as-carbonized burlap cloth displays an interconnected structure constituted by microfilaments, as can be seen from figure 12. Such material can be prepared with different shapes, i.e., length and diameter, depending on the downstream applications. The interconnected and porous structure of the support provide high contact surface areas with the reactant that significantly contribute to the reduction of the mass transfer limitations within the catalyst bed which thus, contributes to the improvement of the catalyst performance.

Figure 13 shows representative SEM micrographs at different magnifications of pure porous silicon carbide pellets obtained from example 5a, showing its highly mesoporous internal structure.

The electrical conductivity of all these structured materials was measured by a two-point contact probe device and confirms the insulating character of the host substrates. The insulating character of the supports renders them inapt to be heated through a direct and contactless IH mode.

Example 2: Induction heating (IH) setup

Two inductors with different nominal power input and induction coil configurations were used in the present work.

The IH experiments were conducted on an EasyHeat® 8310 induction heating setup (10 kW, 3x380V, Ambrell Ltd) equipped with a spiral 6-turn induction coil (L = 1.05 m, pure coil resistance = 2.066 x $10^{-3}$ $\Omega$) and external cooling chiller with recirculated water/glycerol (10%) mixture as cooling medium. In a typical experiment, a quartz reactor containing the catalyst, similar to that used for the Joule hearting (JH) experiment, was placed inside the induction heater coils. The real-time temperature control/regulation was ensured by a PID system (Proportional Integral Derivative controller, Eurotherm model 3504) connected to a laser pyrometer (Optris®, power < 1 mW, located at about 15 cm from the catalyst) focused on the middle of the catalyst bed and with the capability of working in 150 - 1000 °C range. The heating/cooling rate allowed for the system is about 300 °C min$^{-1}$ in the 160 - 300 °C temperature range. The inductor operated at a frequency of 263 $\pm$ 10 kHz which generated a much lower magnetic field compared to those operated at lower frequency, such as < 10 kHz. In addition, magnetic fields from low frequency induction are more penetrating to the surrounding material. However, in order to reduce the exposure of the worker to the magnetic field the setup was localized inside a Faraday cage surrounded with metal mesh.

The second induction heating setup consisted with an inductor device provided by CEIA (Power Cube 45/400) operated with a nominal power input of 4.5 kW (1x230V) equipped with a spiral 6-turn induction coil and external cooling with tap water. In a typical experiment, a quartz reactor containing the catalyst, similar to that used for the Joule hearting (JH) experiment, was placed inside the induction heater coils. The real-time temperature control/regulation was ensured by a PID system (Proportional Integral Derivative controller, Eurotherm model 3504) connected to a laser pyrometer (Optris®, power < 1 mW, located at about 24 cm from the catalyst) focused on the middle of the catalyst bed and with the capability of working in 150 - 1000 °C range. The heating/cooling rate allowed for the system is about 300 °C min$^{-1}$ in the 160 - 600 °C temperature range. The inductor operated at a frequency of 400 $\pm$ 20 kHz which generated a much lower magnetic field compared to those operated at lower frequency, such as < 10 kHz.

For indirect Joule heating the catalyst was localized within an electric oven set at the reaction temperature and controlled by a thermocouple inserted inside the ceramic section of the oven. The products analysis was conducted in a similar manner as for the induction heating mode.

Example 3: Dip coating process

Typically, 1 g of expanded graphite, 100 ml of water and 1g of PVP (acting as surfactant and binder) were added in a 1 L beaker. The mixture was subjected to an ultrasonication process using a Branson Digital Sonifier 450 tip sonicator (frequency of ∼ 50/60 Hz and power of 80 W) assisted by mechanical stirring for about 2 h. The resulting few-layer graphene (FLG) dispersion concentration was 10 g/L (1%). Few-layer graphene is defined as graphene containing between 2 and 5 layers. Generally, this technique leads to platelets of thin graphitic carbon structures composed of 2 to 5 sheets, where the sheets have lateral dimensions between 0.5 $\mu$m and 50 $\mu$m (depending on the lateral size of the starting graphite), preferably between 1 $\mu$m and 5 $\mu$m. Advantageously the platelets of FLG display a thickness that ranged between 0.7 nm and 1.7 nm.

The starting materials may include graphitic materials, including natural graphite, synthetic/natural graphite, highly oriented pyrolytic graphite, carbon nanotubes or nanofibers, carbon black, graphitized carbon, expanded graphite, exfoliated graphite, graphene oxide or a combination thereof.

The surfactant was selected from the group consisting of polymeric surfactants (such as poly(vinyl alcohol) or polyvinylpyrrolidone), anionic surfactants, cationic surfactants, nonionic surfactants, amphoteric surfactants, or a combination thereof. The coating process was typically carried out as follows: the insulator substrate was dipped into an aqueous suspension containing various concentrations (5 g/L, 10 g/L and 20 g/L) of platelets of thin graphitic carbon structures at room-temperature. The wet solid was flushed with compressed air to remove the excess of liquid and then oven-dried at 110 °C for 1 h. The as-synthesized composite can be further impregnated with the same suspension of platelets of thin graphitic carbon structures followed by the same thermal treatment in order to increase the platelet loading. The oven-dried sample was further carbonized at 800 °C for 1 h under argon flow in order to remove the remaining liquid inside the porosity and to remove the surfactant and the binder and any other adsorbed species in the composite. The sample was further characterized by different techniques and impregnated with different active phases for catalytic assessment.

Different types of binders can be used to improve the adhesion of the graphene layer on the host substrate (catalyst body), namely, organic binders (in particular sugar, PVP, PVA, carboxymethyl cellulose, lignosulfonates, polyethylene glycol, gelatin, dextrin) or mineral binders (in particular alumina, aluminum phosphate, or magnesium silicate, bentonite, sodium silicate).

In such process the layer of platelets of thin graphitic carbon structures can be deposited prior to the deposition of the final active phase or after. In the first approach, the active phase, which can for example be a metal or an oxide, is deposited onto the layer of platelets of thin graphitic carbon structures, while on the second approach, the layer of platelets of thin graphitic carbon structures covers at least partially the top surface and the active phase, similar to that described above, is localized on the host substrate (catalyst body) surface and covered by a porous layer of platelets of thin graphitic carbon structures.

Example 4: SEM analysis of FLG coated insulator supports

Few-layer graphene (FLG) coatings were applied as described in Example 3 onto different structured host matrix, namely cordierite with straight channels, alumina foam, extrudates of silicon carbide, carbonized cardboard paper, and carbonized burlap cloth. These composites were thoroughly characterized and the results are presented and discussed below.

a) FLG@Cordierite honeycomb with straight channels (FLG@CH) Composites

Figure 14 shows representative photographs of the cordierite honeycomb (CH) before coating (left) and after coating. The FLG coating layer seems to be relatively homogeneous at macroscopic scale as the substrate color was changed from yellow light to grey dark after coating and thermal treatment indicating that the whole substrate (catalyst body) has been covered by a layer of FLG.

Representative SEM micrographs of the FLG@CH composite, with a FLG loading of 5 wt.%, are presented in Figure 15 at different magnifications after annealing for 1 hour at 800 °C. Low magnification SEM micrographs (figures 15A,B) indicate the presence of FLG on the surface of the host matrix (cordierite channel wall). High magnification SEM micrographs confirm the homogeneous stacking of the FLG sheets on the surface of the channel walls (figures 15C,D). In addition, the 3D connected structure of the substrate (catalyst body), and thus a continuous coating layer of FLG on the host substrate surface, could provide a continuous circulation of the eddy current inside the whole composite which could significantly lower the total power input to maintain the composite at a set reaction temperature.

b) FLG@alumina Foam (FLG@Al$_2$O$_3$-F) Composites

Various FLG@Al$_2$O$_3$-F composites on alumina foam were prepared by dip-coating in aqueous suspensions as explained in Example 3, using different FLG loadings and functionalization.

Figure 16 shows representative photographs of the alpha-alumina foam before coating and after three dip-coating steps with 10 g/L FLG suspension, leading to the final composite with 3 wt.% FLG loading. The FLG was functionalized with PVP (Polyvinylpyrrolidone) to improve the adhesion strength of the FLG on the alumina surface.

Representative SEM micrographs of the FLG@Al$_2$O$_3$-F composite, with a FLG loading of 3 wt.% (FLG functionalized with PVP (Polyvinylpyrrolidone)) are presented in Figure 17 at different magnifications. The SEM micrographs (Fig. 17A,B) indicate the presence of a dense and homogeneous layer of FLG on the surface of the alumina host matrix. Section view SEM micrograph confirms the homogeneous stacking of the FLG sheets within the layer and the intimate contact surface between the two phases (Fig. 17C). It is worthy to note that the FLG coating thickness is relatively thick, ca. 10 $\mu$m to 30 $\mu$m, for a total FLG loading of 3 wt.-%. Such results could be explained by the relatively low specific surface area of the alpha-alumina host substrate (catalyst body), i.e. 3 m$^2$/g, which can hardly disperse the FLG upon the coating step. It is expected that the coating layer thickness will be thinner for high specific surface area gamma-alumina, i.e. > 200 m$^2$/g. In addition, the 3D connected structure of the substrate (catalyst body), and thus a continuous coating layer of FLG on the host substrate (catalyst body) surface, could provide a continuous circulation of the eddy current which could significantly lower the total power input to maintain the composite at a set reaction temperature.

c) FLG@cardboard paper (FLG@CB) composites

Figure 18 shows representative digital photographs of the rolled cardboard, before (figure 18A) and after carbonization at 500°C for 1 h under argon flow (figure 18B), and after dip-coating with a layer of FLG followed by a carbonization step at 700°C for 1 h under argon flow (figure 18C). The total FLG loading amounted to 4 wt.-% according to the measurement of weight change after dip-coating and thermal treatment. Representative SEM micrographs are presented in Figure 19. The SEM micrograph displays a regular microstructure of the cardboard with connected structure which was homogeneously covered with a layer of FLG. The SEM micrographs (figures 19A,B) show the presence of a relatively thick (typically in the order of about 4 $\mu$m to about 10 $\mu$m) and continuous FLG layer on the top of the CB substrate. High-resolution SEM micrograph (figure 19C) clearly evidences the stacking of the different FLG sheets on top of each other within the coating layer with a high accessibility in between. In addition, the 3D connected structure of the catalyst body, and thus a continuous coating layer of FLG on the host substrate (catalyst body) surface, could provide a continuous circulation of the eddy current which could significantly lower the total power input to maintain the composite at a set reaction temperature.

d) FLG@burlap cloth (FLG@burlap) composites

SEM micrographs of burlap rolled to a cylindrical shape, carbonized at 500 °C under argon for 1 h, dip-coated in an aqueous suspension of FLG (10 g/L) at room-temperature, oven dried at 110 °C, and followed by a carbonization step at 500 °C for 1 h under argon flow are shown on Figure 20. According to the SEM micrographs the coating layer of the FLG is somehow less homogeneous compared to that observed in other examples. Indeed, the low magnification SEM micrographs (figures 20A,B) clearly evidence the presence of some FLG aggregates within the composite. However, high-resolution SEM micrograph (figure 20C) evidences the presence of FLG sheets around the filaments structure of the host substrate (catalyst body). Such results could be explained by the low interaction between the deposited FLG and the host substrate. It is expected that the improvement of the coating and coverage could be done by functionalizing the FLG as in the case of alpha-alumina foam host substrate. In addition, the 3D connected structure of the substrate, and thus a continuous coating layer of FLG on the host substrate surface, could provide a continuous circulation of the eddy current which could significantly lower the total power input to maintain the composite at a set reaction temperature.

Example 5: Electrical conductivity of the FLG coated composites

The surface electrical conductivity of the different composites was determined by measuring the electrical resistance of the composites using a 115 Fluke digital multimeter; the electrical conductivity was then recalculated using the following standard equations:

$$S= \pi \times r^2 \text{ (equation 1)}$$

$$\rho= R*S/L \text{ (equation 2)}$$

$$\sigma= 1/\rho \text{ (equation 3)}$$

Results are summarized in Table 1 and compared with that obtained on the pristine insulated support. It can be seen that the coating of the supports with a thin and homogeneous layer of FLG significantly increases the overall electrical conductivity of the composites, and consequently their ability to harvest electromagnetic energy and convert it to heat.

Table 1: Electrical conductivity of the different FLG-coated insulator composites.

| Sample | Length [cm] | Diameter [cm] | Electrical conductivity [S/cm] |
|---|---|---|---|
| FLG-1.5 wt.-%@CB (CardBoard) | 6.1 | 2.3 | 0.25 |
| FLG-1.5 wt.-%@Al$_2$O$_3$-F | 2.8 | 2.5 | 0.01 |
| FLG-3.0 wt.-%@Al$_2$O$_3$-F | 2.8 | 2.5 | 0.03 |
| FLG-0.05 wt.-%@SiC | 5.0 | 1.3 | 0.93 |
| CB (CardBoard) | 6.1 | 2.3 | $10^{-14}$ |
| Al$_2$O$_3$-F (Foam) | 2.8 | 2.5 | $10^{-12}$ |
| SiC | 5.0 | 1.3 | 0.003 |

Example 6: Thermal behavior of the FLG coated composites under induction heating

The homogeneity of the heat within the samples, CH, Al$_2$O$_3$-F, FLG@CH and FLG@Al$_2$O$_3$-F, was measured with a FLIR camera in order to assess the efficient of heating in the presence of FLG.
The pristine supports displayed no heating due to their insulator character. According to the results the structured supports coated with a FLG layer display a fast and homogeneous heating rate which confirms the high heat harvesting from the induction coil by the coating FLG layer. The fast heat response is attributed to the high intrinsic heat efficiency as a result of a close interconnection between the graphene sheets constituting the coated film. The high heat homogeneity can be attributed to the material continuity through the entire monolith, with no points of poor contact, which allows the heat to be rapidly dissipated within the whole structure.

Figure 21 displays the heating performance of the different FLG-coated samples as a function of power input provided by the induction coil of the different FLG-coated insulator composites: FLG-2%/$Al_2O_3$ foam and FLG-3%/$Al_2O_3$ foam (figure 21A), FLG-2%/cordierite honeycomb and FLG-3%/cordierite honeycomb samples (figure 21B).

According to the results obtained on the FLG@alumina foam (FLG@$Al_2O_3$-F) and FLG@cordierite honeycomb (FLG@CH), increasing the FLG loading leads to a significant improvement of the heating behavior of the samples as the samples require less power input for attaining the same level of temperature. Apparently, increasing the FLG loading in the composites favors the formation of a more continuous layer, surface percolation effect, covering the composite surface which could provide a high performance for heat harvesting from the induction coil which thus, reduces the power supply for heating up the samples. In the examples presented in Figure 21 one can see that increasing the FLG loading on the $Al_2O_3$-F, from 2 wt.-% to 3 wt.-%, significantly improve the heat harvesting as for the same set temperature at 700°C, the power consumption is decreased from almost 3000 W to less than 1000 W (figure 21A). Similar results were also observed for the FLG-coated cordierite monolith composite presented in Figure 21B.

The continuous coating layer of FLG allows one to heat up in an efficient way the whole composite with a relatively low FLG loading. Indeed, the 3D connected structure of the catalyst body, and thus a continuous coating layer of FLG on the host substrate (catalyst body) surface, could provide a continuous circulation of the eddy current which could significantly lower the total power input to maintain the composite at a set reaction temperature.

Example 7: Use of Ni-9%-FLG-3%@$Al_2O_3$-F as a catalyst for $CO_2$ methanation process

The FLG@$Al_2O_3$ supports were impregnated with Ni(NOs)$_2$ · 6 $H_2O$ aqueous solutions using an incipient wetness impregnation approach. The samples with various salt precursor loadings were then oven-dried at 120 °C for 10 h and calcined in air at 350 °C for 2 h (heating rate 2 °C min$^{-1}$) as to convert the nickel salt into the corresponding oxide. The Ni loading measured experimentally is amounted to 9 wt.-%. The Ni loading was calculated by weighting the catalyst, before and after impregnation and thermal treatment. This intermediate composite product is designated here as NiO/FLG@A-l$_2$O$_3$. The as obtained NiO/FLG@$Al_2O_3$ composites were then further treated through activation treatment (reduction at 350°C under hydrogen atmosphere for 3h to generate Ni/FLG@$Al_2O_3$ composites) which will be used as catalyst for the methanation reaction.

The reaction was carried out as follows: catalyst weight = 6.2 g, [Ni] concentration = 9.0 wt.%, pressure = atmospheric pressure, WHSV = 1.4 and 4.1 Ug(catalyst)/h, reaction temperature = variable. Results are summarized on Figure 22.

The catalytic process to convert $CO_2$ in the presence of hydrogen into synthetic methane was carried out on the Ni-9%-FLG-3%@$Al_2O_3$-F catalyst under induction heating at different reaction temperature and under atmospheric pressure (Fig. 22A). The similar trend was also observed when operating the catalyst at higher WHSV. It is worthy to note that at WHSV (Weight Hourly Space Velocity) of 4.1 L/g(catalyst)/h the $CO_2$ methanation conversion only displays a slight decrease compared to that obtained at.1.4 L/g(catalyst)/h. Such results indicate that at high WHSV the turbulences of the gaseous reactant induce higher contact with the active sites leading to an improvement of the catalytic activity.

The catalyst also displays a high stability as a function of time-on-stream at a WHSV of 4.1 L/g(catalyst)/h as shown in Figure 22B.

Example 8: Use of FLG-6%/Ni-2%-Co-2%@SiC composite as a catalyst for dry-reforming of methane

In this example a FLG coated composite containing a Ni-2 wt.-% and Co-2 wt.-% was used where the metal active phase was localized on the top surface of the SiC catalyst body and covered by a porous layer of FLG. The composite was prepared as follows: the SiC was first impregnated with an aqueous solution containing both nickel and cobalt salt precursor to yield a final metal loading of 2 wt.-% for each metal. After impregnation, the solid was dried at 110 °C in an oven for 2 h and then calcined in air at 350 °C for subsequently 2 h in order to decompose the salt precursor into its corresponding oxide. The as-synthesized catalyst was then coated using an aqueous suspension of FLG (10 g/L) at room temperature followed by an oven drying in air at 110 °C and finally, by a mild reduction at 350 °C under hydrogen to generate the final catalyst. Results are summarized on Figure 23.

The FLG-6%/Ni-2%-Co-2%/SiC composite catalyst was evaluated in the dry-reforming of methane (DRM) under induction heating and the results are presented in Figure 23A as a function of time-on-stream at 700 °C. The reaction was carried out using an equimolar mixture of $CO_2$ and $CH_4$ without dilution by inert gas (50% $CO_2$ & 50% $CH_4$) with a total flow rate of 220 mL/min. The reactant mixture was passed downward through the catalyst bed and the exit stream, containing both unconverted reactants and products, was monitored on-line by GC analysis. According to the results the catalyst displays a high and stable DRM performance, expressed in terms of $CO_2$ and $CH_4$ conversion, as a function of time-on-stream up to 30 h at 700 °C. The $H_2$/CO ratio is close to 1 which confirms the absence of side reactions to yield carbon (Figure 23B). The results also indicate that the coated layer of FLG on the top surface of the composite did not prevent the access of the reactants to the active site localized underneath, which is probably due to the presence of large pores within the FLG layer as observed by SEM technique. The high stability of the DRM as a function of time-on-stream indicates that the coated layer of FLG, on the top of the Ni-Co/SiC catalyst, is extremely stable and not subject to degradation reaction in the presence of hydrogen at high temperature.

Example 9: Incorporation of thin graphitic carbon structures inside low electrical conductors

Example 9a: Preparation of a pure porous silicon carbide support (non induction-heating support)

A pure silicon carbide support was prepared by mixing 100 g of metallic silicon, 330 g of phenolic resin, 300 g of carbon black, 700 g of a water solution of polyvinyl alcohol and 20g of polysaccharide. The mixture was extruded into 3 mm pellets and 13 mm cylinders that were dried under 40°C and heated at 120°C under air for 3h. The dried bodies were then treated 1 hours at 1 360°C under argon to form the final pure SiC supports.
This support represents a prior art catalyst support. It cannot be heated by induction heating.

Example 9b: Doping of silicon carbide with thin graphitic carbon structures incorporated into the bulk of the catalyst support.

The term "doping" refers here to the embodiment in which the thin graphitic carbon structures do not form a layer but are incorporated in the bulk of the material (catalyst support or unsupported catalyst).
A solution of FLG (3.5% in water) has been prepared as described in example 3.
A powder formed by graphene nanoplatelets (GNP) was purchased from IMERYS (reference C-Therm 301).
The preparation of example 9a has been reproduced except that the above additives have been introduced in the formulation during the initial mixture as to obtain a final concentration comprised between 1 % and 20 % (mass %).
The results of crushing strength on the 3 mm pellets show that the additives do not significantly affect the mechanical strength of the material.

Example 9c: Preparation of a porous carbon support (poor induction heating support)

A pure porous carbon support was prepared by mixing 300 g of phenolic resin, 300 g of carbon black, 450 g of a water solution of polyvinyl alcohol and 7 g of polysaccharide. The mixture was extruded into 3 mm pellets and 13 mm cylinders that are dried at 40°C and heated at 150°C for 3 h under air. The dried bodies were then treated 1 hours at 900°C under argon to form the final porous carbon support.

Examples 9d: Preparation of a porous carbon support doped with thin graphitic carbon structures

The same additives as for examples 9b have also been used to prepare doped porous carbon supports.
The preparation of example 9c has been reproduced except that the above additives have been introduced in the formulation during the initial mixture as to obtain a final concentration comprised between 1 % and 20 % (mass%).
The results of crushing strength on the 3 mm pellets show that the additives do not significantly affect the mechanical strength of the material.
Photographs of the undoped porous carbon, with low electrical conductivity, and the same after incorporating of 20 % of graphene nanoplatelets (C-Therm301), are presented in Figure 24A and B. The incorporation of the graphitic susceptor inside the porous carbon matrix did not modify the macroscopic shape of the sample. In such blended composite the graphene nanoplatelets dispersed within the entire carbon matrix will play the role of heat susceptor to harvest the heat provided by the induction coil to heat up the composite through conduction. The SEM micrographs of the doped porous carbon are presented in Figure 25 with different magnifications in order to highlight the dispersion of the graphene nanoplatelets inside the carbon host matrix. According to the SEM results the graphene nanoplatelets are well dispersed on the topmost surface of the host carbon substrate (catalyst body) (figures 25A,B). The section views also confirm the good dispersion of the graphene nanoplatelets within the host substrate matrix (figures 25C,D). This is of interest because the higher the dispersion of the graphitic based susceptor inside the composite, the better the heat transfer to the whole composite. In such composite the physical and chemical properties of the host substrate (catalyst body), i.e. high surface area and high interaction with the deposited active phase, being it an oxide or metal or others, can be maintained while only the fact of being heated up under direct induction heating is improved.
It is also worthy to note that a hybrid composite can be also produced by combining the two thermal doping methods: incorporation of high heat harvester inside the insulator or low electrical conductor host substrates (catalyst body) and coating the whole composite surface by a layer of thin graphitic carbon structures.

Example 10: Electrical conductivity of the FLG and other thin graphitic carbon structures incorporated inside the host matrix composites.

Results in terms of electrical conductivity obtained on the different composites, with a direct incorporation of different thin graphitic carbon structures as susceptor, are summarized in Table 2 and compared with that obtained on the pristine host substrates (catalyst bodies) with low electrical conductivity. It can be seen that the incorporation of high electrical conductors inside the pristine support significantly increases the overall electrical conductivity of the composites, and consequently their ability to harvest electromagnetic energy and convert it to heat when immersed inside an induction coil.

Table 2: Electrical conductivity of the different composites containing thin graphitic carbon structures incorporated inside the low electrical conductor and insulator host structure.

| Sample | Example | Electrical conductivity[S/cm] |
|---|---|---|
| Un-doped porous carbon (reference) | 9c | 20.6 |
| Porous carbon doped with -FLG-1.0 wt.-% | 9d | 23.1 |
| Porous carbon doped with C-Therm301-5 wt.-% | 9d | 25.1 |
| Porous carbon doped with C-Therm301-20 wt.-% | 9d | 46.0 |
| Un-doped porous SiC (reference) | 9a | 0.003 |
| Porous SiC doped with C-Therm301-20 wt.-% | 9b | 0.62 |
| NOTE : Length of all samples was 5 cm, diameter 1.3 cm. | | |

It is worthy to note that composites produced by a blending method, where the susceptor is evenly dispersed throughout the host substrate matrix, require higher power input for reaching the same set temperature, despite the high susceptor loading, compared to those produced by coating method. For this reason, the coating method represents the preferred embodiment of the present invention. Such difference can be explained in terms of the way the susceptor is present in the composite: in the case of coating the susceptor is present in the form of a continuous layer on the surface of the composite which favors the heat harvesting from the induction coil and the flow of the eddy currents, while for the case of blending, the susceptor is dispersed evenly within the host substrate matrix and remains as isolated centers which requires higher power input to be heated up at the same temperature.

**Claims**

1.   Solid catalyst for heterogeneous catalysis, said catalyst being unsupported or supported, and in this latter case comprising an active phase dispersed onto the surface of a catalyst support, said solid catalyst being **characterized in that** it comprises thin graphitic carbon structures, said thin graphitic carbon structures forming preferably a layer, said thin graphitic carbon structures comprising between about 1 and about 300 graphene layers and preferably between about 1 and about 150 graphene layers.

2.   Catalyst according to claim 1, **characterized in that** said thin graphitic carbon structures have a mean lateral dimension comprised between about 0.5 $\mu$m and about 300 $\mu$m, and preferably between about 2 $\mu$m and about 200 $\mu$m.

3.   Catalyst according to claim 1 or 2, **characterized in that** said catalyst, prior to the deposition of said layer of thin graphitic carbon structures, has a non-metallic electrical conductivity, and may be an insulator.

4.   Catalyst according to any of claims 1 to 3, wherein said catalyst support is selected from the group formed by: alumina; silica; silicates and preferably aluminium silicates and more preferably zeolites; titania; zirconia, cordierite; silicon carbide; carbon.

5.   Catalyst according to any of claims 1 to 4, **characterized in that** said catalyst is in the form of foam, monolith, spheres, grains, pellets, extrudates, sheets, fibers.

6.   Catalyst according to any of claims 1 to 5, **characterized in that** said catalyst or catalyst support is porous.

7. Catalyst according to any of claims 1 to 6, **characterized in that** said catalyst or catalyst support has a BET specific surface exceeding 5 m$^2$/g, and preferably exceeding 10 m$^2$/g.

8. Catalyst according to any of claims 1 to 7, **characterized in that** said thin graphitic carbon structures are present in a concentration sufficient to allow inductive heating of said catalyst.

9. Catalyst according to any of claims 1 to 8, **characterized in that** said active phase is a metallic phase.

10. Catalyst according to any of claims 1 to 8, **characterized in that** said active phase is a metal oxide or a mixture of metal oxides.

11. Process for making a catalyst according to any of claims 1 to 10, wherein said layer of thin graphitic carbon structures is applied from a dispersion of said thin graphitic carbon structures in liquid media, followed by drying, wherein said thin graphitic carbon structures comprise between about 1 and about 300 graphene layers and preferably between about 1 and about 150 graphene layers, said process being **characterized in that** said application of said layer is carried out on an unsupported catalyst, or on a supported catalyst comprising a catalyst support and an active phase or a precursor of an active phase, or on a catalyst support prior to the application of the precursor of an active phase.

12. Process according to claim 11, comprising the following steps:

    (i) an unsupported catalyst or a supported catalyst or a catalyst support is provided,
    (ii) said layer of thin graphitic carbon structures is applied onto said catalyst or said catalyst support from a dispersion of said thin graphitic carbon structures in liquid media, followed by drying, wherein said platelets comprise between about 1 and about 300 graphene layers and preferably between about 1 and about 150 graphene layers, knowing that said application of said layer can comprise a plurality of individual application steps,
    (iii) if a catalyst support has been provided in step (i), an active phase is created on said catalyst support by application of a precursor of said active phase, followed by drying, and possibly by activation of the precursor to form said active phase.

13. Process for using the catalyst according to any of claims 1 to 10 in a chemical reactor for a heterogenous reaction, comprising inductive heating of the catalyst.

14. Process according to claim 13, wherein said catalyst is submitted to inductive heating while it is in contact with a gaseous and/or liquid reaction mixture.

15. Use of a catalyst according to any of claims 1 to 10 in a catalytic process, wherein said catalyst is submitted to inductive heating.

Figure 1

EP 4 501 448 A1

Figure 2

Figure 3

Host substrate
Active phase
Few-layer graphene sheet

Figure 4

Figure 5

Figure 6

Figure 7

Figure 8

EP 4 501 448 A1

Figure 9

Figure 10

EP 4 501 448 A1

Figure 11

A

B

10 mm

10 mm

Figure 12

EP 4 501 448 A1

Figure 13

Figure 14

10 mm     10 mm     10 mm

EP 4 501 448 A1

Figure 15

Figure 16

Figure 17

Figure 18

Figure 19

Figure 20

Figure 21

Figure 22

Figure 23

Figure 24

A

B

10 mm

10 mm

Figure 25

Europäisches
Patentamt

European
Patent Office

Office européen
des brevets

# EUROPEAN SEARCH REPORT

**Application Number**

EP 23 18 9379

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WANG WEI ET AL: "CO2 methanation under dynamic operational mode using nickel nanoparticles decorated carbon felt (Ni/OCF) combined with inductive heating", CATALYSIS TODAY, ELSEVIER, AMSTERDAM, NL, vol. 357, 18 February 2019 (2019-02-18), pages 214-220, XP086302927, ISSN: 0920-5861, DOI: 10.1016/J.CATTOD.2019.02.050 [retrieved on 2019-02-18] * abstract * * paragraphs [02.2], [03.1] * | 1-15 | INV. B01J21/18 B01J23/755 B01J35/56 B01J35/57 B01J35/61 B01J37/02 C07C9/04 |
| Y | WO 2023/072996 A1 (TOTALENERGIES ONETECH [FR]; UNIV DE STRASBOURG UNISTRA [FR] ET AL.) 4 May 2023 (2023-05-04) * claim 1 * | 1-15 | |
| Y,D | WO 2023/073000 A1 (TOTALENERGIES ONETECH [FR]; UNIV DE STRASBOURG UNISTRA [FR] ET AL.) 4 May 2023 (2023-05-04) * examples * | 1-15 | |

**TECHNICAL FIELDS SEARCHED (IPC)**

B01J
C07C

The present search report has been drawn up for all claims

| Place of search | Date of completion of the search | Examiner |
|---|---|---|
| Munich | 25 January 2024 | Zieba, Roman |

EPO FORM 1503 03.82 (P04C01)

## ANNEX TO THE EUROPEAN SEARCH REPORT
## ON EUROPEAN PATENT APPLICATION NO.

**EP 23 18 9379**

This annex lists the patent family members relating to the patent documents cited in the above-mentioned European search report.
The members are as contained in the European Patent Office EDP file on
The European Patent Office is in no way liable for these particulars which are merely given for the purpose of information.

**25-01-2024**

| Patent document cited in search report | Publication date | Patent family member(s) | Publication date |
|---|---|---|---|
| WO 2023072996 A1 | 04-05-2023 | NONE | |
| WO 2023073000 A1 | 04-05-2023 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014209973 A
- WO 2021053306 A
- WO 2017036794 A
- WO 2020254184 A, Haldor Topsoe
- WO 2022076250 A
- WO 2023073000 A1
- WO 2020079372 A
- WO 2020109380 A

**Non-patent literature cited in the description**

- **WANG W.** ; **DUONG-VIET C.** ; **TUCI G.** ; **NHUT J. M.** ; **GIAMBASTIANI G.** ; **PHAM-HUU C.** Induction heating: an enabling technology for the heat management in catalytic processes. *ACS Catal.*, 2019, vol. 9, 7921-7935